(19) **Europäisches Patentamt**
**European Patent Office**
**Office européen des brevets**

(11) **EP 4 455 742 A1**

(12) # EUROPEAN PATENT APPLICATION

(43) Date of publication:
**30.10.2024 Bulletin 2024/44**

(21) Application number: **24172250.3**

(22) Date of filing: **24.04.2024**

(51) International Patent Classification (IPC):
**G02B 1/115** (2015.01)   **G02B 13/00** (2006.01)
**G02B 13/04** (2006.01)   **G02B 13/18** (2006.01)
**G02B 9/64** (2006.01)

(52) Cooperative Patent Classification (CPC):
**G02B 1/115; G02B 9/64; G02B 13/0045;**
**G02B 13/006; G02B 13/04; G02B 13/18**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.04.2023 JP 2023071682**

(71) Applicant: **CANON KABUSHIKI KAISHA**
**Tokyo 146-8501 (JP)**

(72) Inventors:
 • **YAMAMOTO, Hiroshi**
  **Tokyo, 146-8501 (JP)**
 • **KAJIYAMA, Kazuhiko**
  **Tokyo, 146-8501 (JP)**
 • **KAWAKAMI, Tomoaki**
  **Tokyo, 146-8501 (JP)**
 • **BAN, Masuo**
  **Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **OPTICAL SYSTEM AND IMAGING APPARATUS INCLUDING THE SAME**

(57)     An optical system includes, in order from an object side to an image side, a front group, an aperture stop, and a rear group, wherein the front group includes a first lens, a second lens, and a third lens disposed in order from the object side to the image side, wherein an object side surface of the second lens is an aspheric surface having an inflection point in a cross section including an optical axis, wherein an image side surface of the second lens is a concave surface, wherein a first antireflection film is disposed on at least one of the image side surface of the second lens and an object side surface of the third lens, and wherein the predetermined inequality is satisfied for light incident perpendicularly on the surface on which the first antireflection film is disposed and parallel to an optical axis of the optical system: $1.00 < Ra/Rb$, wherein Ra is the average reflectance of light having a wavelength of at least 400 nm and up to 450 nm, and Rb is the average reflectance of light having a wavelength of at least 700 nm and up to 750 nm.

**FIG.1**

_100_

EP 4 455 742 A1

**Description**

TECHNICAL FIELD

The present invention relates to an optical system suitable for an imaging apparatus, such as a digital still camera, a digital video camera, an in-vehicle camera, a mobile phone camera, a monitoring camera, a wearable camera, or a medical camera.

BACKGROUND

Description of the Related Art

In an imaging apparatus, such as an in-vehicle camera, there is a demand for not only a wide angle of view but also an increased image forming magnification in the proximity of an optical axis (e.g., in a center region). As a usage example of the imaging apparatus installed in the rear of a moving apparatus (e.g., vehicle), an image corresponding to the center region (e.g., as a main region of interest) is enlarged and displayed on an electronic rearview mirror. Further a whole image of a region (e.g., peripheral region) other than the center region is displayed on an in-vehicle display. To implement this feature, it is desirable to set the image forming magnification (e.g., focal length) of an optical system to be different between the center region and the region other than the center region.

Japanese Patent Application Laid-Open No. 2020-46565 discusses an optical system in which a lens surface on the most object side is an aspheric surface having an inflection point in a cross section including an optical axis, which leads to a magnification difference between the center region and the peripheral region. However, in the optical system discussed in Japanese Patent Application Laid-Open No. 2020-46565, because the diameter of the lens surface on the most object side is greater than the diameter of other lens surfaces, a sophisticated manufacturing technique is required to form the lens surface of the most object side into the above-described aspheric shape. Further, Japanese Patent Application Laid-Open No. 2020-46565 leaves discussion about a method for reducing ghost that occurs by light (stray light) reflected off the lens surfaces and reaching an imaging element.

SUMMARY OF THE INVENTION

According to a first aspect of the present invention, there is provided an optical system comprising, in order from an object side to an image side image side: a front group; an aperture stop; and a rear group, wherein the front group includes a first lens, a second lens, and a third lens disposed in order from the object side to the image side. An object side surface of the second lens is an aspheric surface having an inflection point in a cross section including an optical axis. An image side surface of the second lens is a concave surface. A first antireflection film is disposed on at least one of the image side surface of the second lens and an object side surface of the third lens. In a situation where light is incident perpendicularly on the surface on which the first antireflection film is disposed, and wherein the light is parallel to an optical axis of the optical system (e.g., the light may be on, or aligned with, the optical axis), the following inequality is satisfied: $1.00 < Ra/Rb$, wherein Ra is the average reflectance of light having a wavelength of at least 400 nm and up to 450 nm, and Rb is the average reflectance of light having a wavelength of at least 700 nm and up to 750 nm. Further aspects of the optical system are defined by dependent claims 2 to 17. According to a second aspect of the present invention, there is provided an imaging apparatus as specified in claim 18. According to a third aspect of the present invention, there is provided a display system as specified in claim 19. According to a fourth aspect of the present invention, there is provided a moving apparatus as specified in claim 20.

Further features of the present invention will become apparent from the following description of embodiments with reference to the attached drawings.

BRIEF DESCRIPTION OF THE DRAWINGS

Fig. 1 is a schematic diagram of a main part of an optical system according to Numerical Example 1.
Fig. 2 is an aberration diagram of the optical system according to Numerical Example 1.
Fig. 3 is a schematic diagram of a main part of an optical system according to Numerical Example 2.
Fig. 4 is an aberration diagram of the optical system according to Numerical Example 2.
Fig. 5 is a schematic diagram of a main part of an optical system according to Numerical Example 3.
Fig. 6 is an aberration diagram of the optical system according to Numerical Example 3.
Fig. 7 is a schematic diagram of a main part of an optical system in which an antireflection film according to a comparative example is disposed.

Fig. 8 is a diagram illustrating light amount distribution on an image plane according to the comparative example.

Fig. 9 is a diagram illustrating a reflectance characteristic of an antireflection film of Example 1 and a reflectance characteristic of the antireflection film of the comparative example.

Fig. 10 is a diagram illustrating light amount distribution on an image plane according to Example 1.

Fig. 11 is a diagram illustrating an aspheric shape of an object side surface of a second lens according to each Numerical Example.

Fig. 12 is a diagram illustrating a reflectance characteristic of an antireflection film of Example 2 and the reflectance characteristic of the antireflection film of the comparative example.

Fig. 13 is a diagram illustrating light amount distribution on an image plane according to Example 2.

Fig. 14 is a schematic diagram of an imaging apparatus according to an embodiment.

Fig. 15 is a schematic diagram of a moving apparatus according to an exemplary embodiment and a diagram illustrating an optical characteristic of an optical system.

Fig. 16 is a block diagram illustrating an example of a configuration of an in-vehicle system according to the embodiment

DESCRIPTION OF THE EMBODIMENTS

Hereinafter, preferred embodiments of the present invention will be described with reference to the drawings. Note that the drawings may be drawn in a scale different from the actual scale for convenience. In the drawings, the same members are denoted by the same reference numerals, and the redundant descriptions will be omitted.

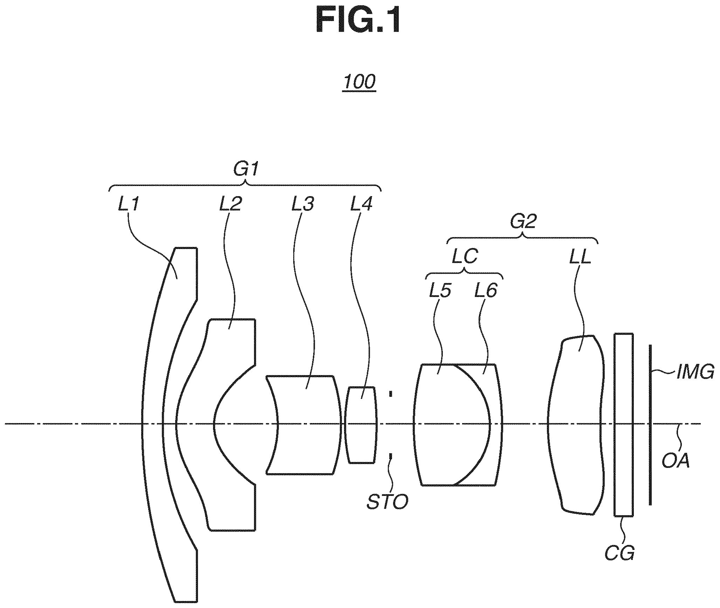

Figs. 1, 3, and 5 are cross-sectional views of optical systems, each including an optical axis OA, according to Numerical Examples 1 to 3, respectively. In each cross-sectional view, the left side is an object side (e.g., front side), and the right side is an image side (e.g., rear side). The optical system according to each Example is an imaging optical system that is used in an imaging apparatus, and an imaging surface of an imaging element is disposed at a position of an image plane IMG. An optical block CG disposed on the object side of the image plane IMG is an optical element, such as an optical filter or cover glass, that does not contribute to image formation of the optical system. The optical system according to each Example may be used as a projection optical system in a projection apparatus, such as a projector. In this case, a display surface of a display element, such as a liquid crystal panel, is disposed at the position of the image plane IMG.

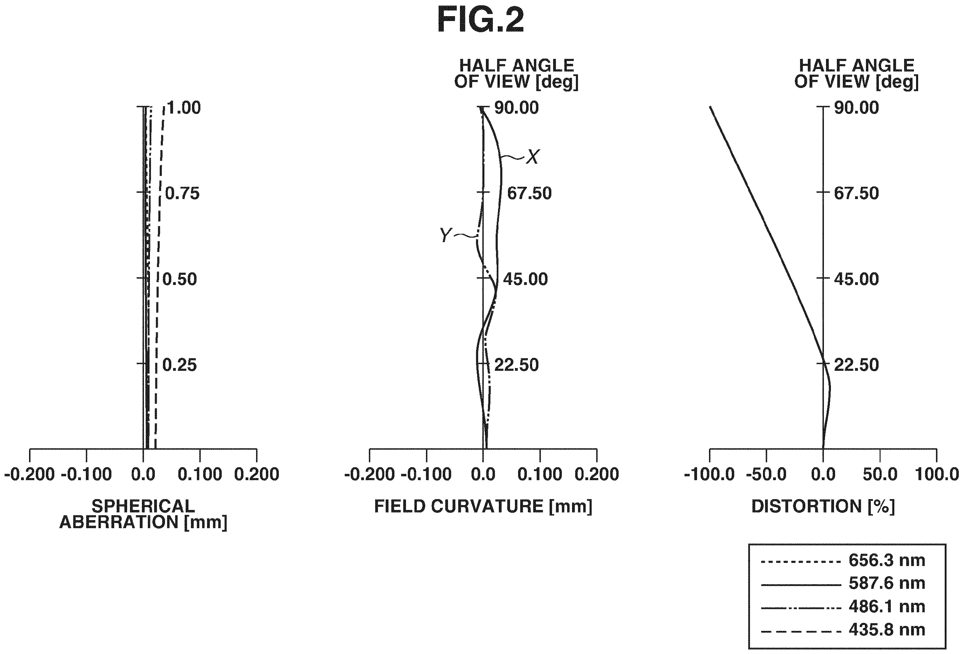

Figs. 2, 4, and 6 are longitudinal aberration diagrams of the optical systems according to Numerical Examples 1 to 3, respectively. Each longitudinal aberration diagram illustrates spherical aberration, field curvature (e.g., astigmatism), and distortion in order from the left. In each longitudinal aberration diagram, aberrations with respect to 656.3 nm (C-line), 587.6 nm (d-line), 486.1 nm (the F-line), and 435.8 nm (g-line) are indicated by different lines.

The features of the optical system according to each Example are described in detail.

The optical system according to each Example consists of a front group G1, an aperture stop STO, and a rear group G2 disposed in this order from the object side to the image side. The optical block CG is considered to be excluded from the optical system. The front group G1 includes a first lens L1, a second lens L2, and a third lens L3 disposed in this order from the object side to the image side. A lens refers to an optical element having a refractive power, and does not include an optical element not having a refractive power, such as parallel flat glass.

It is desirable that the optical system according to each Example should satisfy the following inequality (1):

$$-2.54 \leq f23/fg1 \leq -0.15 \ (1),$$

where the combined focal length of the second lens L2 and the third lens L3 is f23, and the focal length of the front group G1 is fg1.

Appropriately setting the relationship between fg1 and f23 to the state satisfying Inequality (1) leads to achievement of both widening of the angle of view of the optical system and downsizing of the front group G1. If f23/fg1 falls below the lower limit of Inequality (1), an absolute value of the combined power of the second lens L2 and the third lens L3 decreases excessively, which is undesirable because it results in difficulty in widening the angle of view of the optical system. Otherwise, the absolute value of the power of the front group G1 increases excessively, which is undesirable because it results in difficulty in preventing or reducing a change in the optical performance of the optical system in a case where placement of the lenses is shifted due to a manufacturing error. If f23/fg1 exceeds the upper limit of Inequality (1), the absolute value of the combined power of the second lens L2 and the third lens L3 increases excessively, which is undesirable because it results in difficulty in preventing or reducing a change in the optical performance of the optical system in a case where placement of the lenses is shifted due to a manufacturing error. Otherwise, the absolute value of the power of the front group G1 decreases excessively, which is undesirable because it results in difficulty in shortening the entire length of the optical system.

Further, it is desirable that the optical system according to each Example should satisfy the following inequalities (1a) to (1d) in this order.

$$-1.60 \leq f23/fg1 \leq -0.25 \quad (1a)$$

$$-1.20 \leq f23/fg1 \leq -0.44 \quad (1b)$$

$$-1.02 \leq f23/fg1 \leq -0.52 \quad (1c)$$

$$-0.94 \leq f23/fg1 \leq -0.56 \quad (1d)$$

In an imaging apparatus, such as an in-vehicle camera to be described below, there is a demand for not only a wide angle of view but also an increased image forming magnification in the proximity of an optical axis (e.g., in a center region). As a usage example of the imaging apparatus installed in the rear of a moving apparatus (e.g., vehicle), an image corresponding to the center region as a main region of interest is enlarged and displayed on an electronic rearview mirror, and a whole image of a region (peripheral region) other than the center region is displayed on an in-vehicle display. To implement this feature, it is desirable to set the image forming magnification (e.g., focal length) of an optical system to be different between the center region and the region other than the center region.

In the optical system according to each Example, an object side surface (lens surface on object side) of the second lens L2 is an aspheric surface having an inflection point in a cross section including the optical axis OA. In this configuration, a ray, of a beam from the first lens L1, passed through a peripheral portion in a radial direction of the first lens L1 is able to be refracted to a side with the optical axis OA via the object side surface of the second lens L2. Consequently, the image forming magnification of a center region and the image forming magnification of a peripheral region of the optical system can be easily set different from each other. Particularly, the diameter of the second lens L2 is smaller than the diameter of the first lens L1 disposed on the object side of the second lens L2, and thus, the manufacturing difficulty and the manufacturing cost can be reduced compared to a case where such an aspheric surface is formed in the first lens L1.

Next, a description is given of an antireflection film for preventing occurrence of ghost (stray light or unwanted light) in the optical system according to each Examples.

In the optical system according to each Example, the second lens L2 and the third lens L3 are disposed at positions relatively close to an object among the front group G1 disposed on the object side with respect to the aperture stop STO, which means that the angular apertures of lens surfaces of the second lens L2 and the third lens L3 are likely to be large. Particularly, widening the angle of view of the optical system leads to an increase in an angular aperture of a lens surface disposed at a position relatively close to the object. Because an image side surface of the second lens L2 is a concave surface, if stray light reflected off an object side surface of the third lens L3 adjacent to the image side surface of the second lens L2 is incident on the image side surface of the second lens L2, the stray light is likely to reach the image plane IMG. Thus, an antireflection film is disposed on at least one of the image side surface of the second lens L2 and the object side surface of the third lens L3.

In forming the antireflection film on a lens surface, a manufacturing method such as general vapor deposition is employed. In a case where the antireflection film is disposed on a lens surface having a large angular aperture, variation (film unevenness) in the film thickness of the antireflection film is likely to occur between a center portion and a peripheral portion of the lens surface. Specifically, the film thickness of the antireflection film is thinner in the peripheral portion than in the center portion. If the film thickness of the antireflection film in the peripheral portion is thinner than a desired thickness (design value), a reflectance characteristic indicating the relationship between the wavelength and the reflectance of incident light is shifted to the short wavelength side.

As an example, a description will be given of a case where an antireflection film having reflectance in the wavelength band of visible light (the visible light band) lower than reflectance in another wavelength band is disposed on a lens surface. If the film thickness of the antireflection film is thinner than a design value, the reflectance in a wavelength band on the short wavelength side of the visible light band decreases more than a desired value, while the reflectance in a long wavelength band in the visible light band increases more than a desired value. Even if the antireflection film is disposed on the lens surface, the reflectance in the long wavelength band that needs to be lowered cannot be sufficiently lowered, and red ghost is likely to occur in a captured image.

The following table illustrates the configuration of an antireflection film according to a comparative example. In the following table, a refractive index indicates the refractive index at a wavelength of 550 nm (reference wavelength), and optical film thickness indicates the product of the refractive index and the thickness of a layer. A description is given of a case on the condition that the antireflection film is disposed on a base material of the same material as a material of the second lens L2 of an optical system 100 according to Numerical Example 1.

[Table 1]

| Layer Number | Material Name | Refractive Index | Optical Film Thickness [nm] |
|---|---|---|---|
| | Air | 1.00 | |
| Sixth Layer | $SiO_2$ | 1.47 | 44.0 |
| Fifth Layer | $MgF_2$ | 1.38 | 71.5 |
| Fourth Layer | $Ta_2O_5$ | 2.12 | 253.0 |
| Third Layer | $SiO_2$ | 1.47 | 49.5 |
| Second Layer | $Ta_2O_5$ | 2.12 | 22.0 |
| First Layer | $SiO_2$ | 1.47 | 198.0 |
| | Base Material | 1.58 | |

The antireflection film according to the comparative example is a film for lowering the reflectance in the visible light band (400 nm to 700 nm) and is a multilayer film consisting of a plurality of layers including materials different from each other. Specifically, the antireflection film according to the comparative example consists of first to sixth layers laminated in this order from a side with the base material to a side with air. A material included in each of the first to sixth layers is any of silicon oxide ($SiO_2$), tantalum oxide ($Ta_2O_5$), and magnesium fluoride ($MgF_2$), and the materials of layers adjacent to each other are different from each other.

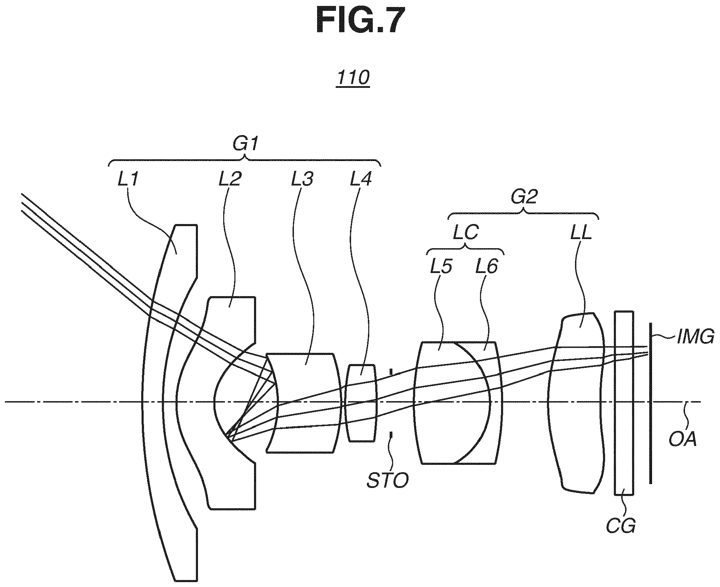

Fig. 7 illustrates an optical system 110 in which the antireflection film according to the comparative example is disposed on the image side surface of the second lens L2 and the object side surface of the third lens L3. The configuration of the optical system 110 according to the comparative example is similar to the optical system 100 according to Numerical Example 1 illustrated in Fig. 1 except for the configuration of the antireflection film. Fig. 7 illustrates an optical path of stray light incident on a lens surface of the most object side at an angle of 40° to the optical axis OA of the optical system 110, then being reflected off the object side surface of the third lens L3 and the image side surface of the second lens L2 in this order, and reaching the image plane IMG. As illustrated in Fig. 7, sufficiently lowering the reflectance in the long wavelength band of light being incident at positions (peripheral portions) relatively far from the optical axis OA in the second lens L2 and the third lens L3 is difficult due to the film unevenness of the antireflection film.

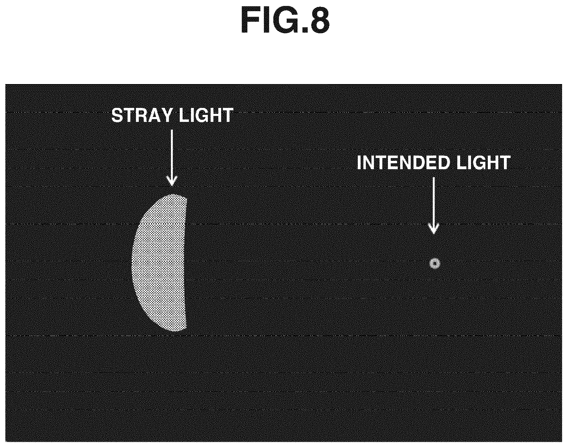

Fig. 8 illustrates a light amount distribution of the stray light illustrated in Fig. 7 on the image plane IMG.

Fig. 8 also illustrates a light amount distribution of intended light incident on the lens surface of the most object side at an angle of 40° to the optical axis OA of the optical system 110, then passing through the object side surface of the third lens L3, and reaching the image plane IMG. In Fig. 8, the whiteness of display of the light increases with increase in the amount of light, and the blackness of the display of the light increases with a decrease in the amount of light. As illustrated in Fig. 8, the amount of light of the stray light on the image plane IMG increases with an increase in closeness to the amount of light of the intended light, which indicates that the stray light is insufficiently reduced by the antireflection film according to the comparative example. Consequently, if the optical system 110 according to the comparative example is applied to an imaging apparatus, ghost occurs in an image acquired by an imaging element disposed on the image plane IMG, which results in a decrease in the visibility of a subject corresponding to intended light.

Accordingly, in the optical system according to each Example, a first antireflection film different from the antireflection film according to the comparative example is disposed on at least one of the image side surface of the second lens L2 and the object side surface of the third lens L3, whereby generation of stray light in light reflection off each surface is prevented. The reflectance characteristic of the first antireflection film is described below.

An average reflectance of light having a wavelength of 400 nm or more and 450 nm or less and perpendicularly incident, parallel to the optical axis (e.g., on (or aligned with) the optical axis OA), on the surface on which the first antireflection film is disposed is Ra.

The average reflectance of light having a wavelength of 700 nm or more and 750 nm or less and perpendicularly incident, parallel to the optical axis (e.g., on (or aligned with) the optical axis OA), on the surface is Rb. The optical system according to each Example satisfies the following inequality (2).

$$1.00 < Ra/Rb \quad (2)$$

Inequality (2) represents that the average reflectance Rb of the light having a wavelength of 700 nm or more and 750 nm or less is lower than the average reflectance Ra of the light having a wavelength of 400 nm or more and 450 nm or less. Forming the first antireflection film satisfying Inequality (2) on at least one of the image side surface of the second lens L2 and the object side surface of the third lens L3 where the angular apertures are likely to be large leads to sufficient reduction in ghost due to stray light even with film unevenness. Specifically, even in a case where the film thickness of the first antireflection film in the peripheral portion is thin due to the film unevenness, an increase in the reflectance in the long wavelength band in the visible light band is able to be reduced or prevented. Not satisfying Inequality (2) results in, similar to the antireflection film according to the comparative example, a difficulty in reducing or preventing an increase in the reflectance in the long wavelength band.

If the difference between the average reflectance Ra and the average reflectance Rb increases excessively, there arises an issue that an excellent reflectance characteristic cannot be obtained in a case where the variation in the film thickness is small. Thus, it is desirable that the optical system according to each Example should satisfy the following inequality (2a).

$$1.00 < Ra/Rb < 9.17 \quad (2a)$$

Further, it is more desirable that the optical system according to each Example should satisfy the following inequalities (2b) to (2d) in this order.

$$1.12 < Ra/Rb < 7.25 \quad (2b)$$

$$1.25 < Ra/Rb < 5.33 \quad (2c)$$

$$1.33 < Ra/Rb < 4.37 \quad (2d)$$

The following table illustrates a configuration of the first antireflection film according to Example 1.

[Table 2]

| Layer Number | Material Name | Refractive Index | Optical Film Thickness [nm] |
|---|---|---|---|
| | Air | 1.00 | |
| Ninth Layer | $MgF_2$ | 1.38 | 115.1 |
| Eighth Layer | $Ta_2O_5$ | 2.12 | 23.3 |
| Seventh Layer | $Al_2O_3$ | 1.65 | 31.1 |
| Sixth Layer | $Ta_2O_5$ | 2.12 | 81.5 |
| Fifth Layer | $Al_2O_3$ | 1.65 | 17.1 |
| Fourth Layer | $Ta_2O_5$ | 2.12 | 32.2 |
| Third Layer | $Al_2O_3$ | 1.65 | 52.9 |
| Second Layer | $Ta_2O_5$ | 2.12 | 7.0 |
| First Layer | $Al_2O_3$ | 1.65 | 30.7 |
| | Base Material | 1.58 | |

The first antireflection film according to Example 1 is a film for lowering the reflectance in the wavelength band of visible light (400 nm to 700 nm) and is a multilayer film consisting of a plurality of layers including materials different from each other. Specifically, the first antireflection film according to Example 1 consists of first to ninth layers laminated in this order from a side with the base material to a side with air. A material included in each of the first to ninth layers is any of aluminum oxide ($Al_2O_3$), tantalum oxide ($Ta_2O_5$), and magnesium fluoride ($MgF_2$), and the materials of layers adjacent to each other are different from each other.

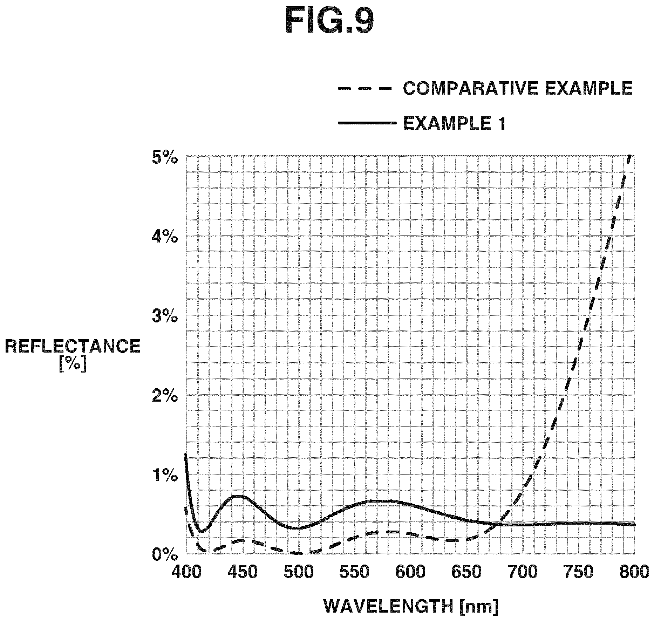

Fig. 9 illustrates the reflectance characteristic of a case where the antireflection film according to the comparative example is disposed on the image side surface of the second lens L2 of the optical system 100 according to Numerical Example 1 (dashed line) and the reflectance characteristic of a case where the first antireflection film according to Example 1 is disposed on the image side surface of the second lens L2 of the optical system 100 according to Numerical Example 1 (solid line). Fig. 9 illustrates the wavelength of light perpendicularly incident, on the optical axis OA, on the image side surface of the second lens L2 (the horizontal axis) and the reflectance of the light at each wavelength (the vertical axis). In the comparative example, the average reflectance Ra in the wavelength band of 400 nm or more and 450 nm or less is 0.13%, while the average reflectance Rb in the wavelength band of 700 nm or more and 750 nm or less is 1.58%, which means that Inequality (1) is not satisfied. On the other hand, in Example 1, the average reflectance Ra is 0.55%, while the average reflectance Rb is 0.37%, which means that Inequality (1) is satisfied.

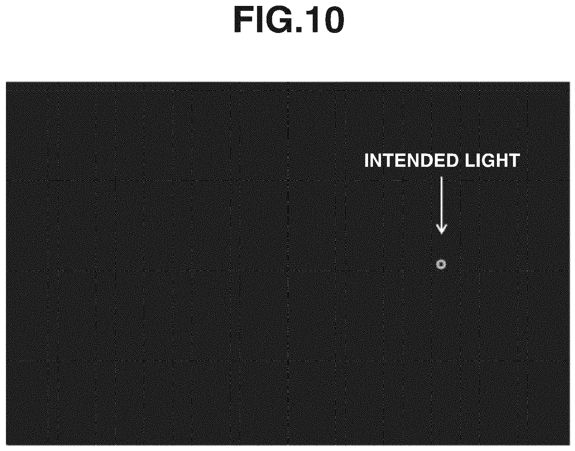

Fig. 10 illustrates a light amount distribution on the image plane IMG of light incident on a lens surface of the most object side at an angle of 40° to the optical axis OA of the optical system 100 in which the first antireflection film according to Example 1 is disposed on the image side surface of the second lens L2 and the object side surface of the third lens L3. In Fig. 10, stray light is sufficiently reduced to the extent that the stray light cannot be viewed, in the present example in comparison with the comparative example illustrated in Fig. 8.

The above-described configuration, leads to achievement of an optical system that is small in size and has a wide angle of view, but is easy to manufacture, and further can prevent or reduce occurrence of ghost. The optical system according to each Example can obtain the effect of the present invention so long as the optical system satisfies at least the above configuration, and other configurations may be appropriately changed.

The first antireflection film according to Example 1 is based on the condition that the wavelength band used by the optical system 100 is the visible light band (400 nm to 700 nm), and is intended to lower the reflectance in the visible light band. Thus, it is desirable that the reflectance of light perpendicularly incident, on the optical axis OA, on the surface on which the first antireflection film is disposed should be 1.2% or less at all the wavelengths in the band of 400 nm or more and 750 nm or less. Further, it is desirable that the reflectance should be 1.0% or less at all the wavelengths in the band of 400 nm or more and 750 nm or less. It is more desirable that the reflectance should be 0.8% or less at all the wavelengths in the band of 400 nm or more and 750 nm or less. With this configuration, even in a case where the reflectance characteristic is shifted to the short wavelength side due to the film unevenness, excellent reflection prevention performance is able to be obtained in the entire visible light band. Further, however, in which wavelength band the reflectance is lowered by the antireflection film may be appropriately changed according to the wavelength band used by the optical system.

While the optical system according to each Example consists of the front group G1 having a positive refractive power, the aperture stop STO, and the rear group G2 having a positive refractive power that are disposed in this order from the object side to the image side, at least one of the front group G1 and the rear group G2 may have a negative refractive power, where necessary. To achieve widening of the angle of view of the optical system while shortening the entire length of the optical system, it is desirable that both the front group G1 and the rear group G2 should have positive refractive powers.

While the front group G1 according to each Example includes the first lens L1 having a negative refractive power, the second lens L2 having a negative refractive power, the third lens L3, and a fourth lens L4 having a positive refractive power that are disposed in this order from the object side to the image side, the configuration may be changed, where necessary. For example, the inequality of the refractive power (the power) of each lens may be set different, or the number of lenses may be increased or decreased. However, to achieve downsizing of the entire system, it is desirable that the front group G1 should consist of four or fewer lenses.

Regarding the third lens L3, since an absolute value of the power of the third lens L3 is small as described below, determination of which of a positive refractive power and a negative refractive power the third lens L3 has may be made in accordance with the specifications of each optical system.

The rear group G2 according to each Example includes a cemented lens LC and a positive lens LL (final lens) disposed on the most image side. However, the inequality of the refractive power of each lens in the rear group G2 may be set different, the number of lenses may be increased or decreased, or a plurality of lenses separated from each other may be employed instead of the cemented lens LC, where necessary. However, to achieve excellent correction performance with respect to field curvature or magnification chromatic aberration that occurs due to widening of the angle of view of the optical system, it is desirable that the rear group G2 should consist of the cemented lens LC and the positive lens LL.

In the optical system according to each Example, the first antireflection film satisfying Inequality (2) is disposed on each of the image side surface of the second lens L2 and the object side surface of the third lens L3. Alternatively, a configuration may be employed in which the first antireflection film is disposed on either one of the image side surface of the second lens L2 and the object side surface of the third lens L3, where necessary. However, to achieve excellent reduction or prevention performance with respect to ghost due to stray light, it is desirable that the first antireflection film should be disposed on both the image side surface of the second lens L2 and the object side surface of the third lens L3.

In a case where the first antireflection film is disposed on neither the image side surface of the second lens L2 nor the object side surface of the third lens L3, and if not only the image side surface of the second lens L2 but also the object side surface of the third lens L3 is a concave surface, stray light is likely to reach the image plane IMG. Thus, in a case where the object side surface of the third lens L3 is a concave surface as in the optical system according to each Example, the first antireflection film is disposed on at least one of the image side surface of the second lens L2 and the object side surface of the third lens L3, whereby the effect of reducing ghost due to stray light is more significant.

As described above, a shift in the reflectance characteristic due to the film unevenness of an antireflection film occurs on a lens surface having a large angular aperture as in the image side surface of the second lens L2 and the object side surface of the third lens L3. In other words, a shift in the reflectance characteristic of an antireflection film is less likely to occur on a lens surface other than the image side surface of the second lens L2 and the object side surface of the third lens L3. Thus, if the first antireflection film is disposed on the lens surface other than the image side surface of the second lens L2 and the object side surface of the third lens L3, conversely, there may arise a difficulty in reducing or preventing stray light. In this case, it is desirable to form a second antireflection film having a reflectance characteristic different from the reflectance characteristic of the first antireflection film on the lens surface.

An average reflectance of light having a wavelength of 400 nm or more and 450 nm or less and perpendicularly incident on, the optical axis OA, on the surface on which the second antireflection film is disposed is Rc. An average reflectance of light having a wavelength of 700 nm or more and 750 nm or less and perpendicularly incident, on the optical axis OA, on the surface is Rd. It is desirable that the optical system according to each Example should satisfy the following inequality (3).

$$1.0 < Rd/Rc \ (3)$$

Inequality (3) represents that the average reflectance Rd of the light having a wavelength of 700 nm or more and 750 nm or less is higher than the average reflectance Rc of the light having a wavelength of 400 nm or more and 450 nm or less. The second antireflection film satisfying Inequality (3) is disposed on a lens surface other than the image side surface of the second lens L2 and the object side surface of the third lens L3, whereby ghost due to stray light is reduced more excellently. As the second antireflection film, for example, the antireflection film according to the comparative example may be employed.

Further, it is more desirable that the optical system according to each Example should satisfy the following inequalities (3a) to (3c) in this order.

$$1.5 < Rd/Rc < 25.0 \ (3a)$$

$$3.0 < Rd/Rc < 20.0 \ (3b)$$

$$5.0 < Rd/Rc < 15.0 \ (3c)$$

The first antireflection film may be disposed on a lens surface other than the image side surface of the second lens L2 and the object side surface of the third lens L3, where necessary. It is, however, desirable that selection of which of the first and second antireflection films is disposed should be made in accordance with the angular aperture of the lens surface. The configuration of the first antireflection film and the configuration of the second antireflection film are not limited to that described in the above tables. However, to obtain excellent reflection prevention performance while facilitating the designing and the manufacturing of the antireflection films, it is desirable that the first antireflection film should include three or more types of materials different from each other.

In a case of the first antireflection film including first to third layers including materials different from each other, it is desirable that the optical system according to each Example should satisfy the following inequalities (4) to (6):

$$1.30 \leq n1 \leq 1.40 \ (4),$$

$$1.45 \leq n2 \leq 1.70 \ (5),$$

and

$$1.80 \leq n3 \leq 2.20 \ (6),$$

where the refractive index of the first layer is n1, the refractive index of the second layer is n2, and the refractive index of the third layer is n3.

Using the first to third layers satisfying Inequalities (4) to (6) leads to excellent reflection prevention performance while facilitating the designing and the manufacturing of the antireflection films. In the first antireflection film according to Example 1, the ninth layer including $MgF_2$ is equivalent to the first layer, each of the first, third, fifth, and seventh layers including $Al_2O_3$ is equivalent to the second layer, and each of the second, fourth, and sixth layers including $Ta_2O_5$ is equivalent to the third layer.

To obtain more excellent reflection prevention performance, it is desirable that the uppermost layer (on the most air side) furthest away from the surface on which the antireflection film is disposed (base material) should consist of a material having the lowest refractive index. In the first antireflection film according to Example 1, excellent reflection prevention performance is achieved in such a manner that the ninth layer as the uppermost layer consisting of $MgF_2$ (the first layer) is configured to be a layer having a refractive index lower than refractive indices of the other layers. To obtain excellent reflection prevention performance while facilitating the designing and the manufacturing, it is desirable that repetitive layers disposed by alternately laminating two types of materials should be disposed on the side with the base material rather than on the side with the uppermost layer. The first antireflection film according to Example 1 includes repetitive layers disposed by alternately laminating a layer including $Al_2O_3$ (the second layer) and a layer including $Ta_2O_5$ (the third layer) on the side with the base material rather than on the side with the uppermost layer.

Each of the antireflection films according to the comparative example and Example 1 includes at least one of $SiO_2$, $MgF_2$, $Ta_2O_5$, and $Al_2O_3$ to facilitate the designing and the manufacturing, but may use different materials, where necessary. For example, each of the antireflection films may include at least one of titanium oxide ($TiO_2$), lanthanum oxide ($La_2O_3$), and zirconium oxide ($ZrO_2$).

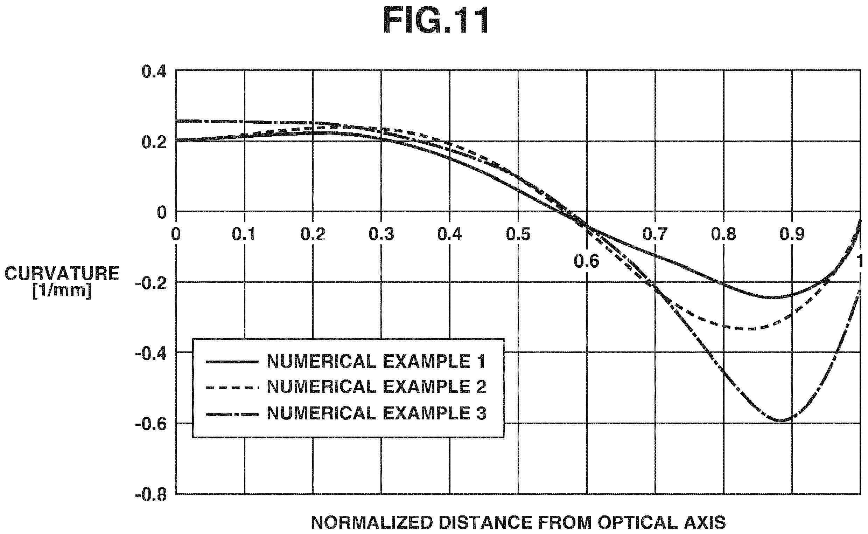

Fig. 11 illustrates the aspheric shape of the object side surface of the second lens L2 according to each Numerical Example. In Fig. 11, the horizontal axis represents a position in the radial direction of the object side surface of the second lens L2 in the cross section including the optical axis OA, and the vertical axis represents the curvature [1/mm] of the object side surface of the second lens L2.

That is, Fig. 11 illustrates a graph plotting the curvature at each position of the object side surface of the second lens L2. A numerical value on the horizontal axis indicates the distance from the optical axis OA to each position in an effective diameter (maximum effective diameter) of the object side surface of the second lens L2 when the distance from the optical axis OA to the position of the effective diameter is normalized to 1 (normalized distance).

It is desirable that the object side surface of the second lens L2 should be such an aspheric surface that the graph indicating the curvature with respect to the distance from the optical axis OA illustrated in Fig. 11 has a plurality of extrema. As illustrated in Fig. 11, the graph according to each Numerical Example has a first extremum (local maximum) and a second extremum (local minimum). Consequently, it is possible to accentuate the difference in image forming magnification between the center region and the peripheral region of the optical system. Specifically, it is possible to make the image forming magnification greater in the center region than in the peripheral region. Thus, it is possible to improve the visibility of an image to a user of an imaging apparatus.

It is desirable that the optical system according to each Example should satisfy at least one of the following inequalities (7) and (8):

$$0.02 \leq E1 \leq 0.40 \ (7),$$

and

$$0.60 \leq E2 \leq 0.98 \ (8),$$

where the normalized distances from the optical axis OA to positions corresponding to the first and second extrema are E1 and E2, respectively, on the object side surface of the second lens L2.

Inequalities (7) and (8) define the appropriate positions of the first and second extrema, respectively. Satisfying Inequality (7) leads to facilitation of an increase in the focal length in the center region of the optical system. Satisfying Inequality (8) leads to facilitation of both downsizing of the optical system and widening of the angle of view of the optical system.

Not satisfying Inequalities (7) and (8) is undesirable because there arises a difficulty in appropriately setting the image forming magnification in each of the center region and the peripheral region.

Further, it is desirable that the optical system according to each Example should satisfy the following Inequalities (7a) and (8a). It is more desirable that the optical system according to each Example should satisfy the following inequalities (7b) and (8b).

$$0.04 \leq E1 \leq 0.35 \ (7a)$$

$$0.65 \leq E2 \leq 0.96 \ (8a)$$

$$0.06 \leq E1 \leq 0.30 \ (7b)$$

$$0.70 \leq E2 \leq 0.94 \ (8b)$$

It is desirable that the optical system according to each Example should satisfy the following inequality (9):

$$2.4 \leq f23/fa1 \leq 16.0 \ (9),$$

where the focal length of an air lens between the second lens L2 and the third lens L3 is fa1.

Appropriately setting the relationship between the focal lengths f23 and fa1 to the state satisfying Inequality (9) allows the entire length of the optical system to be shortened, which leads to downsizing of the entire system. If f23/fa1 falls below the lower limit of Inequality (9), an absolute value of the power of the air lens between the second lens L2 and the third lens L3 decreases excessively, causing a difficulty in shortening the entire length of the optical system. Otherwise, an absolute value of the combined power of the second lens L2 and the third lens L3 increases excessively, causing a difficulty in preventing or reducing a change in the optical performance of the optical system in a case where the placement of the lenses is shifted due to a manufacturing error.

If f23/fa1 exceeds the upper limit of Inequality (9), the absolute value of the power of the air lens between the second lens L2 and the third lens L3 increases excessively, causing a difficulty in preventing or reducing a change in the optical performance of the optical system in a case where the placement of the lenses is shifted due to a manufacturing error. Otherwise, the absolute value of the combined power of the second lens L2 and the third lens L3 decreases excessively, causing a difficulty in widening the angle of view of the optical system.

Further, it is desirable that the optical system according to each Example should satisfy the following inequality (9a). It is more desirable that the optical system according to each Examples should satisfy the following inequality (9b).

$$2.6 \leq f23/fa1 \leq 15.0 \ (9a)$$

$$2.8 \leq f23/fa1 \leq 14.0 \ (9b)$$

It is desirable that the optical system according to each Example should satisfy the following inequality (10):

$$-1.20 \leq fa1/f \leq -0.50 \ (10),$$

where the focal length of the optical system (the entire system) is f.

Satisfying Inequality (10) causes the air lens formed between the second lens L2 and the third lens L3 to have a negative power (negative refractive power) that is strong (has a large absolute value), which leads to further downsizing the optical system. If fa1/f falls below the lower limit of Inequality (10), the negative power of the air lens increases excessively, which is undesirable because a change in the optical performance of the optical system increases in a case where the placement of the lenses is shifted due to a manufacturing error. If fa1/f exceeds the upper limit of Inequality (10), the negative power of the air lens decreases excessively, which is undesirable because it results in a difficulty in further downsizing of the optical system.

Further, it is desirable that the optical system according to each Example should satisfy the following inequality (10a). It is more desirable that the optical system according to each Example should satisfy the following inequality (10b).

$$-1.10 \leq fa1/f \leq -0.55 \ (10a)$$

$$-1.00 \leq fa1/f \leq -0.60 \ (10b)$$

It is desirable that the optical system according to each Example should satisfy the following inequality (11):

$$2.0 \leq f3R1/f2R2 \leq 7.0 \ (11),$$

where the focal length of the image side surface of the second lens L2 is f2R2, and the focal length of the object side surface of the third lens L3 is f3R1.

Appropriately setting the focal lengths (powers) of the image side surface of the second lens L2 and the object side surface of the third lens L3 to the state satisfying Inequality (11) allows the outer diameter of the first lens L1 to be set small, which leads to downsizing of the entire system. If f3R1/f2R2 falls below the lower limit of Inequality (11), the absolute value of the power of the image side surface of the second lens L2 decreases excessively, which is undesirable because it results in a difficulty in reducing the diameter of the first lens L1. If f3R1/f2R2 exceeds the upper limit of Inequality (11), the absolute value of the power of the image side surface of the second lens L2 increases excessively, which is undesirable because it results in a difficulty in preventing or reducing a change in the optical performance of the optical system in a case where the placement of the lenses is shifted due to a manufacturing error.

Further, it is desirable that the optical system according to each Example should satisfy the following inequality (11a). It is more desirable that the optical system according to each Example should satisfy the following inequality (11b).

$$2.3 \leq f3R1/f2R2 \leq 6.7 \ (11a)$$

$$2.5 \leq f3R1/f2R2 \leq 6.5 \ (11b)$$

It is also desirable that the optical system according to each Example should satisfy the following inequality (12):

$$0.60 \leq fg1/fg2 \leq 1.50 \ (12),$$

where the focal length of the rear group G2 is fg2.

Satisfying Inequality (12) leads to an appropriate setting of the powers of the front group G1 and the rear group G2, which leads to further downsizing of the optical system. If fg1/fg2 falls below the lower limit of Inequality (12), the power of the front group G1 increases excessively, which is undesirable because it results in a great change in the optical performance of the optical system in a case where the placement of the lenses is shifted due to a manufacturing error. If fg1/fg2 exceeds the upper limit of Inequality (12), the power of the front group G1 decreases excessively, which is undesirable because it results in a difficulty in further downsizing of the optical system.

Further, it is desirable that the optical system according to each Example should satisfy the following inequality (12a). It is more desirable that the optical system according to each Example should satisfy the following inequality (12b).

$$0.65 \leq fg1/fg2 \leq 1.45 \ (12a)$$

$$0.70 \leq fg1/fg2 \leq 1.40 \ (12b)$$

It is desirable that the optical system according to each Example should satisfy the following inequality (13):

$$-3.50 \le (R2 + R1)/(R2 - R1) \le -1.85 \quad (13),$$

where the radius of curvature of an object side surface of the first lens L1 is R1, and the radius of curvature of an image side surface of the first lens L1 is R2.

Inequality (13) represents a desirable shape (shape factor) of the first lens L1. If (R2 + R1)/(R2 - R1) falls below the lower limit of Inequality (13), the outer diameter of the first lens L1 increases excessively, which is undesirable because it results in a difficulty in further downsizing of the optical system. If (R2 + R1)/(R2 - R1) exceeds the upper limit of Inequality (13), there arises a difficulty in letting in a ray traveling toward a most off-axis image height (most off-axis ray) to the first lens L1, which is undesirable because it results in a difficulty in further widening of the angle of view of the optical system.

Further, it is desirable that the optical system according to each Example should satisfy the following inequality (13a). It is more desirable that the optical system according to each Example should satisfy the following inequality (13b).

$$-3.20 \le (R2 + R1)/(R2 - R1) \le -1.88 \quad (13a)$$

$$-3.00 \le (R2 + R1)/(R2 - R1) \le -1.90 \quad (13b)$$

It is desirable that, on the optical axis OA, the first lens L1 and the second lens L2 should be meniscus lenses (negative meniscus lenses) each having a convex shape toward the object side, and the third lens L3 should be a meniscus lens having a concave shape toward the object side. This configuration decreases the angle of incidence of each ray with respect to the rear group G2 and prevents or reduces a change in the optical performance due to a placement error in each lens (manufacturing error). Further, in a case where the fourth lens L4 is disposed in the front group G1, it is desirable that the fourth lens L4 should be a biconvex lens. With this configuration, the effect of preventing or reducing a change in the optical performance is more significant.

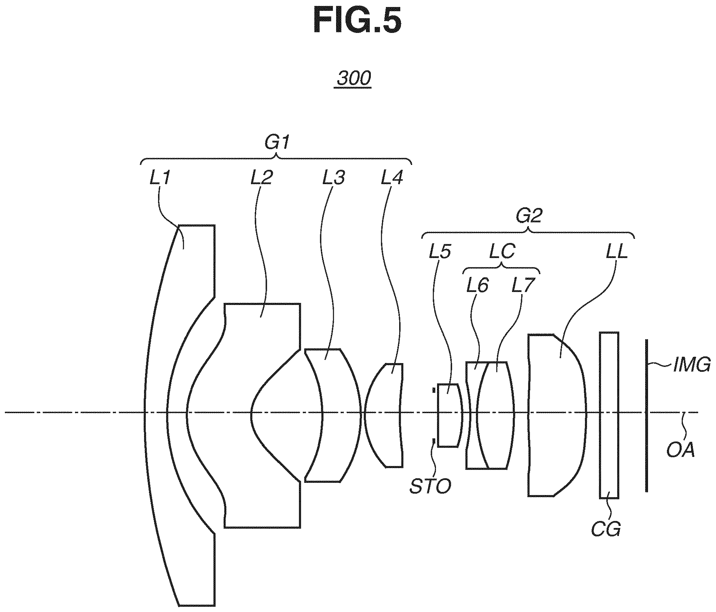

It is desirable that the cemented lens LC in the rear group G2 should include a positive lens and a negative lens to facilitate a reduction in magnification chromatic aberration. While the cemented lens LC may consist of three or more lenses, it is desirable that the cemented lens LC should consist of two lenses to downsize the entire system and facilitate manufacturing of the entire system. The rear group G2 may include a lens other than the cemented lens LC and the positive lens LL. For example, as in Numerical Example 3 illustrated in Fig. 5, a lens L5 may be disposed on the object side of the cemented lens LC. It is desirable that the determination of whether to dispose a lens other than the cemented lens LC and the positive lens LL in the rear group G2 is performed in accordance with the specifications of each optical system or required optical performance. For example, to facilitate reductions in field curvature and magnification chromatic aberration with a small number of lenses while reducing the influence of a manufacturing error, it is desirable that the rear group G2 should consist of the cemented lens LC and the positive lens LL.

It is desirable that the positive lens LL in the rear group G2 should also include an aspheric surface. In other words, it is desirable that at least one of an object side surface and an image side surface of the positive lens LL should be an aspheric surface.

Further, similar to the aspheric surface of the second lens L2 in the front group G1, it is desirable that the aspheric surface of the positive lens LL should have an inflection point in the cross section including the optical axis OA. With this configuration, field curvature that occurs due to the aspheric surface of the second lens L2 is able to be reduced with the reduced number of lenses included in each optical system. In this case, it is desirable that the aspheric surface of the positive lens LL should also have a plurality of extrema. It is more desirable that the optical system according to each Example should satisfy Inequalities (7) and (8).

As described above, setting the second lens L2 and the positive lens LL to be aspheric improves the optical performance. Thus, it is desirable that each lens should be a lens (resin lens) consisting of a resin material. The "resin material" refers to a material of which the main component is a resin (plastic). Examples of the resin material include not only a resin material consisting of only a resin, but also a resin material containing a minute amount of substance (impurities) other than a resin. Each lens consisting of the resin material is advantageous in molding the aspheric surface, which is easier than a case of the lens consisting of a glass material. Thus, the manufacturing cost can be reduced.

On the other hand, a resin lens has the greater temperature coefficient of the refractive index than a glass lens consisting of a general glass material. Thus, in a case where only the second lens L2 and the positive lens LL having strong negative powers are resin lenses, there is a possibility that each lens cannot completely cancel out a change in the focus due to a temperature change. To prevent or reduce a change in the focus due to a temperature change, it is desirable that the third lens L3 should also be a resin lens. Further, it is desirable that the optical system according to each Example should satisfy the following inequality (14):

$$|f/f3| \leq 0.15 \ (14),$$

where the focal length of the third lens L3 is f3, and the focal length of the entire system is f.

Appropriately setting the power of the third lens L3 to the state satisfying Inequality (14) leads to facilitation of preventing and reducing a change in the focus of each optical system due to a temperature change. If |f/f3| falls outside the range of Inequality (14), the absolute value of the power of the third lens L3 increases excessively, which is undesirable because it results in a difficulty in preventing or reducing a change in the focus of each optical system due to a temperature change.

Further, it is desirable that the optical system according to each Example should satisfy the following inequality (14a). It is more desirable that the optical system according to each Example should satisfy the following inequality (14b).

$$|f/f3| \leq 0.13 \ (14a)$$

$$|f/f3| \leq 0.12 \ (14b)$$

Lenses other than the second lens L2, the third lens L3, and the positive lens LL may be resin lenses, where necessary. However, as described above, since a resin lens has a relatively large temperature coefficient of the refractive index, it is desirable that at least one lens should be a glass lens to reduce a change in the focus due to a temperature change. As described above, it is more desirable that only the second lens L2 and the positive lens LL including aspheric surfaces and the third lens L3 for cancelling out a change in the focus due to the second lens L2 and the positive lens LL should be resin lenses. Since processing a resin lens is easier than processing a glass lens, it is desirable that both the object side surface and the image side surface of each resin lens should be aspheric surfaces. With this configuration, it is easy to achieve excellent optical performance with the reduced number of lenses included in each optical system.

It is desirable that the optical system according to each Example should satisfy the following inequality (15):

$$f1/d12 \leq -8.50 \ (15),$$

where the focal length of the first lens L1 is f1, and the distance (space) between the first lens L1 and the second lens L2 on the optical axis OA is d12.

Appropriately setting the relationship between the focal length f1 and the distance d12 to the state satisfying Inequality (15) allows the outer diameters of the first lens L1 and the second lens L2 to be set small, which leads to downsizing of the entire system. If f1/d12 exceeds the upper limit of Inequality (15), the space between the first lens L1 and the second lens L2 increases excessively, which is undesirable because it results in a difficulty in reducing the diameters of the first lens L1 and the second lens L2

If the distance d12 is set infinitely small by bringing the first lens L1 and the second lens L2 close to each other, an absolute value of f1/d12 approaches infinity. However, except for a case forming a cemented lens with the first lens L1 and the second lens L2, it is desirable to dispose the first lens L1 and the second lens L2 separately from each other. Thus, it is desirable that the optical system according to each Example should satisfy the following inequality (15a).

$$-1.00 \times 10^3 \leq f1/d12 \leq -8.50 \ (15a)$$

If f1/d12 falls below the lower limit of Inequality (15a), the space between the first lens L1 and the second lens L2 decreases excessively, which is undesirable because the first lens L1 and the second lens L2 may come into contact with each other due to a manufacturing error. Further, it is desirable that the optical system according to each Example should satisfy the following inequality (15b). It is more desirable that the optical system according to each Example should satisfy the following inequality (15c).

$$-8.00 \times 10^2 \leq f1/d12 \leq -9.00 \ (15b)$$

$$-3.00 \times 10^2 \leq f1/d12 \leq -9.50 \ (15c)$$

The detailed configuration of the optical system according to each Example is described below.

As illustrated in Fig. 1, the optical system 100 according to Example 1 consists of the first lens L1, the second lens L2, the third lens L3, the fourth lens L4, the aperture stop STO, the cemented lens LC, and the positive lens LL disposed in this order from the object side to the image side. A beam from an object (not illustrated) passes through each lens and the optical block (cover glass) CG and is collected on the image plane IMG, whereby an image of the object is formed. The optical system 100 according to the present example has a configuration in which the entire angle of view is 180° (the half angle of view is ±90°), which is sufficiently wide, and the focal length (the center focal length) on the optical axis OA is 4.4 mm, which is sufficiently long.

In the present example, the third lens L3 has a negative refractive power, and the cemented lens LC consists of a positive lens L5 and a negative lens L6 disposed in this order from the object side to the image side. The second lens L2 and the positive lens LL include aspheric surfaces. Specifically, the object side surface and the image side surface of the second lens L2 and the object side surface and the image side surface of the positive lens LL are aspheric surfaces each having an inflection point in the cross section including the optical axis OA. Each lens according to the present example is a glass lens consisting of a glass material, and each aspheric surface is molded by glass molding.

As illustrated in Fig. 2, in the optical system 100 according to the present example, the spherical aberration and the field curvature are excellently corrected. The distortion increases with an increase in the angle of view (the image height) in the peripheral region, whereas the distortion is relatively small in the center region. Consequently, the resolution in the center region is able to be set higher than the resolution in the peripheral region, whereby, as described above, the visibility of an image to a user of an imaging apparatus is improved.

As described above, since the first antireflection film is disposed on the image side surface of the second lens L2 and the object side surface of the third lens L3 in the optical system 100, occurrence of ghost due to stray light is sufficiently prevented or reduced. In the present example, as the first antireflection film, an antireflection film having a reflectance characteristic that lowers the reflectance in the visible light band (400 nm to 700 nm) is employed. Alternatively, an antireflection film having a different reflectance characteristic may be employed, where necessary.

The configuration of an optical system 100 according to Example 2 is similar to that of the optical system 100 according to Example 1 except for the configuration of the first antireflection film.

The following table illustrates the configuration of the first antireflection film according to Example 2.

[Table 3]

| Layer Number | Material Name | Refractive Index | Optical Film Thickness [nm] |
|---|---|---|---|
| | Air | 1.00 | |
| Ninth Layer | $MgF_2$ | 1.38 | 118.8 |
| Eighth Layer | $Ta_2O_5$ | 2.12 | 20.3 |
| Seventh Layer | $Al_2O_3$ | 1.65 | 32.5 |
| Sixth Layer | $Ta_2O_5$ | 2.12 | 116.4 |
| Fifth Layer | $Al_2O_3$ | 1.65 | 17.0 |
| Fourth Layer | $Ta_2O_5$ | 2.12 | 25.8 |
| Third Layer | $Al_2O_3$ | 1.65 | 48.8 |
| Second Layer | $Ta_2O_5$ | 2.12 | 7.0 |
| First Layer | $Al_2O_3$ | 1.65 | 30.7 |
| | Base Material | 1.58 | |

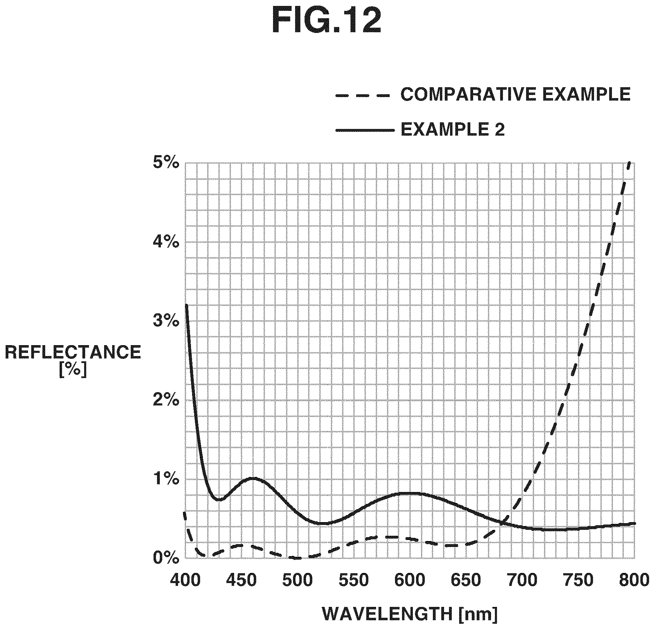

Fig. 12 illustrates the reflectance characteristic of a case where the antireflection film according to the comparative example is disposed on the image side surface of the second lens L2 of the optical system 100 according to Numerical Example 1 (dashed line) and the reflectance characteristic of a case where the first antireflection film according to Example 2 is disposed on the image side surface of the second lens L2 of the optical system 100 according to Numerical Example 1 (solid line). As for the case of Example 2, the average reflectance Ra is 1.26%, while the average reflectance Rb is 0.37%. Thus, Inequality (1) is satisfied.

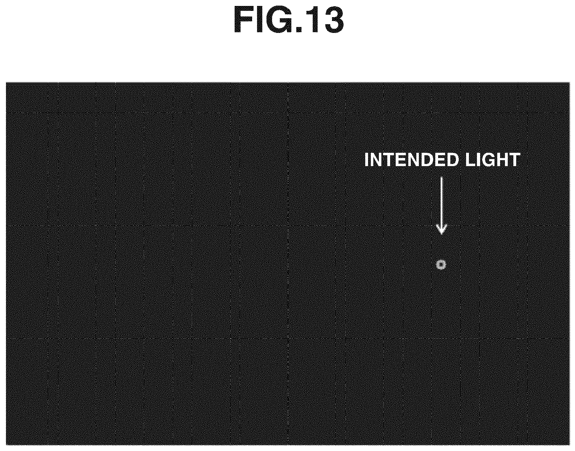

Fig. 13 illustrates a light amount distribution on the image plane IMG of light incident on a lens surface on the most object side at an angle of 40° to the optical axis OA of the optical system 100 in which the first antireflection film according to Example 2 is disposed on the image side surface of the second lens L2 and the object side surface of the third lens L3. As illustrated in Fig. 13, it is understood that stray light is sufficiently reduced to the extent that the stray light is unobservable, in the present example in comparison with the comparative example illustrated in Fig. 8.

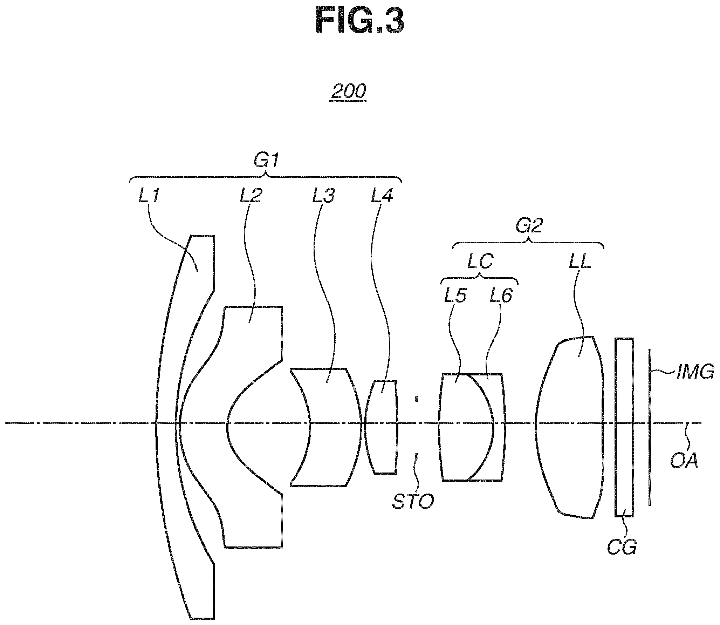

As illustrated in Fig. 3, an optical system 200 according to Example 3 consists of the first lens L1, the second lens L2, the third lens L3, the fourth lens L4, the aperture stop STO, the cemented lens LC, and the positive lens LL disposed in this order from the object side to the image side. Similar to Example 1, also in the present example, the third lens L3 has a negative refractive power, and the cemented lens LC consists of a positive lens L5 and a negative lens L6 disposed in this order from the object side to the image side. The optical system 200 according to the present example has a configuration in which the entire angle of view is 180° (the half angle of view is ±90°), which is sufficiently wide, and the focal length on the optical axis OA is 4.4 mm, which is sufficiently long.

In the present example, unlike Example 1, not only the second lens L2 and the positive lens LL but also the third lens L3 includes an aspheric surface. Specifically, the object side surfaces and the image side surfaces of the second lens L2, the third lens L3, and the positive lens LL are aspheric surfaces. The aspheric surfaces of the second lens L2 and the positive lens LL have inflection points in the cross section including the optical axis OA, but the aspheric surfaces of the third lens L3 do not have inflection points. In the present example, unlike Example 1, each of the second lens L2, the third lens L3, and the positive lens LL consists of a resin material, and the other lenses consist of glass materials. That is, the aspheric surfaces are molded by plastic molding.

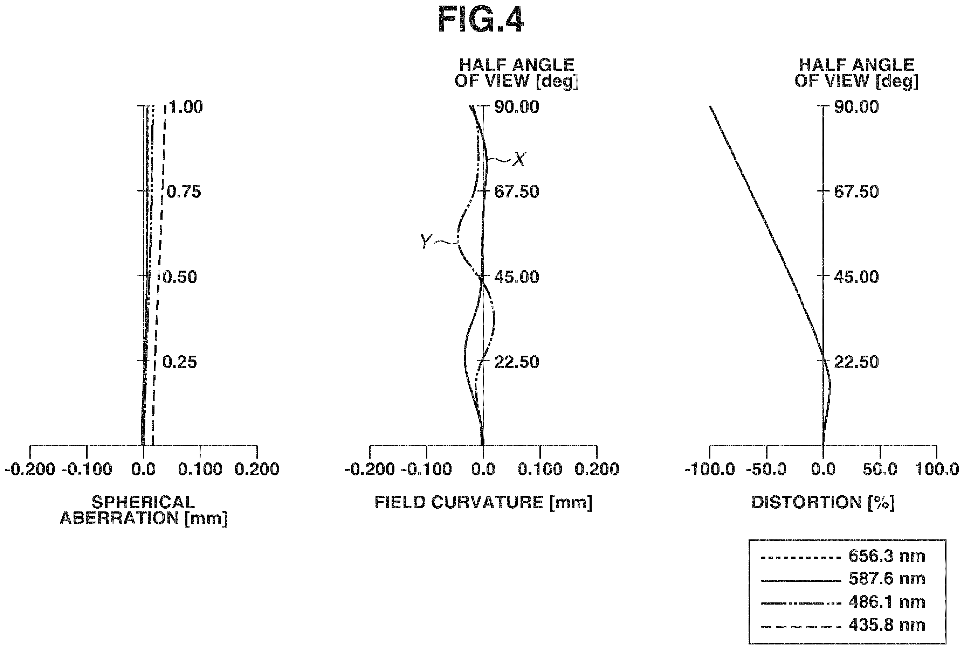

As illustrated in Fig. 4, in the optical system 200 according to the present example, the spherical aberration and the field curvature are excellently corrected. The distortion increases with an increase in the angle of view in the peripheral region, whereas the distortion is relatively small in the center region.

Since the first antireflection film similar to that according to Example 1 is disposed on the image side surface of the second lens L2 and the object side surface of the third lens L3 in the optical system 200, the occurrence of ghost due to stray light is sufficiently prevented or reduced.

As illustrated in Fig. 5, an optical system 300 according to Example 4 consists of the first lens L1, the second lens L2, the third lens L3, the fourth lens L4, the aperture stop STO, a fifth lens L5, the cemented lens LC, and the positive lens LL disposed in this order from the object side to the image side. In the present example, unlike Example 1, the third lens L3 has a positive refractive power, the fifth lens L5 having a positive refractive power is disposed on the object side with respect to the cemented lens LC, and the cemented lens LC consists of a negative lens L6 and a positive lens L7 disposed in this order from the object side to the image side. The optical system 300 according to the present example has a configuration in which the entire angle of view is 180° (the half angle of view is ±90°), which is sufficiently wide, and the focal length on the optical axis OA is 4.4 mm, which is sufficiently long.

In the present example, unlike Example 1, not only the second lens L2 and the positive lens LL but also the third lens L3 and the fifth lens L5 include aspheric surfaces. Specifically, the object side surfaces and the image side surfaces of the second lens L2, the third lens L3, the fifth lens L5, and the positive lens LL are aspheric surfaces. The aspheric surfaces of the second lens L2 and the positive lens LL have inflection points in the cross section including the optical axis OA, but the aspheric surfaces of the third lens L3 and the fifth lens L5 do not have inflection points. In the present example, unlike Example 1, each of the second lens L2, the third lens L3, and the positive lens LL consists of a resin material, and the other lenses consist of glass materials. The aspheric surfaces of the second lens L2, the third lens L3, and the positive lens LL are molded by plastic molding, and the aspheric surfaces of the fifth lens L5 are molded by glass molding.

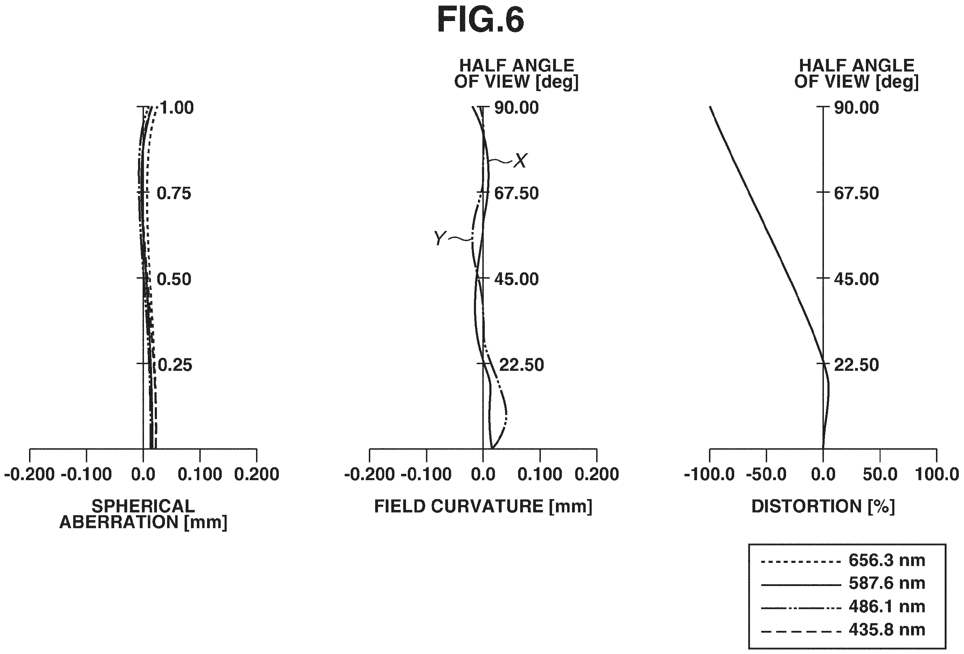

As illustrated in Fig. 6, in the optical system 300 according to the present example, the spherical aberration and the field curvature are excellently corrected. The distortion increases with an increase in the angle of view in the peripheral region, whereas the distortion is relatively small in the center region.

Since the first antireflection film similar to the first antireflection film according to Example 1 is disposed on each of the image side surface of the second lens L2 and the object side surface of the third lens L3 in the optical system 300, the occurrence of ghost due to stray light is sufficiently prevented or reduced.

Numerical Example 1 corresponding to Examples 1 and 2, Numerical Example 2 corresponding to Example 3, and Numerical Example 3 corresponding to Example 4 are illustrated below. In each Numerical Example, each surface number indicates the order of an optical surface counted from an object surface. The radius of curvature of an i-th optical surface is denoted as r [mm]. The space (the distance on the optical axis) between the i-th optical surface and an (i+1)-th optical surface is denoted as d [mm]. The refractive index of the d-line of a medium between the i-th surface and the (i+1)-th surface is denoted as nd. The Abbe number based on the d-line of the medium is denoted as vd. The Abbe number vd is a value defined by the following formula:

$$vd = (nd - 1)/(nF - nC) ,$$

where the refractive indices of the F-line, the d-line, and the C-line are nF, nd, and nC, respectively.

In each Numerical Example, the symbol "*" (asterisk) is added after the surface number of an aspheric surface. In each numerical value, "E±P" means „× 10±P". The shape of each aspheric surface is represented by the following formula:

[Formula. 1]

$$z = \frac{ch^2}{1+\sqrt{1-(1+k)c^2h^2}} + Ah^4 + Bh^6 + Ch^8 + Dh^{10} + Eh^{12} + Fh^{14} + Gh^{16} + Hh^{18} + Ih^{20} + \cdots$$

,

where the amount of displacement from the surface vertex in the optical axis direction is z, the height from the optical axis OA in a direction perpendicular to the optical axis direction is h, the curvature (the reciprocal of the radius of curvature r) is c, a conical coefficient is k, and aspheric surface coefficients are A, B, C, D, E, F, G, H, I, ...

The optical system according to each Numerical Example is a fixed focal length optical system in which the focal length does not change (zooming is not performed), and employs a configuration in which focusing is not performed. That is, the spaces between the lenses included in the optical system according to each of the Numerical Examples are fixed. Thus, a change in the optical performance according to the movement of each lens is avoidable. Alternatively, the optical system may be configured to perform at least one of zooming and focusing, where necessary, and may be configured to change the spaces between the lenses for this purpose.

(Numerical Example 1)

Various Pieces of Data

Center Focal Length 4.4 mm

Fno 2.8

Half Angle of View ±90°

Surface Data

| Surface Number | r | d | nd | vd |
| --- | --- | --- | --- | --- |
| 1 | 24.64 | 1.00 | 1.703 | 52.4 |
| 2 | 12.20 | 0.67 | | |
| 3* | 4.86 | 1.87 | 1.583 | 59.5 |
| 4* | 2.44 | 3.13 | | |
| 5 | -5.08 | 3.11 | 1.595 | 67.7 |
| 6 | -7.50 | 0.20 | | |
| 7 | 8.20 | 1.56 | 1.583 | 59.4 |
| 8 | -13.98 | 0.70 | | |
| 9(STO) | ∞ | 1.12 | | |
| 10 | 11.26 | 3.75 | 1.603 | 65.4 |
| 11 | -3.40 | 0.60 | 1.785 | 25.7 |
| 12 | -12.99 | 2.27 | | |
| 13* | 9.44 | 2.58 | 1.583 | 59.5 |
| 14* | -1697.27 | 0.70 | | |
| 15 | ∞ | 0.90 | 1.560 | 56.0 |
| 16 | ∞ | 0.85 | | |

Aspheric Surface Coefficient

| Surface Number | K | A | B | C | D | E |
|---|---|---|---|---|---|---|
| 3 | -4.499E-01 | 5.138E-03 | -1.389E-03 | 2.223E-04 | -3.240E-05 | 3.183E-06 |
| 4 | -8.597E-01 | 1.547E-02 | -5.648E-03 | 1.575E-03 | -4.610E-04 | 1.122E-04 |
| 13 | 0.000E+0 0 | 6.276E-03 | -3.280E-03 | 9.788E-04 | -2.079E-04 | 3.009E-05 |
| 14 | 0.000E+0 0 | 2.784E-02 | -1.002E-02 | 2.165E-03 | -3.424E-04 | 3.840E-05 |
| Surface Number | F | G | H | I | | |
| 3 | -1.933E-07 | 7.002E-09 | -1.390E-10 | 1.165E-12 | | |
| 4 | -1.915E-05 | 2.114E-06 | -1.361E-07 | 3.895E-09 | | |
| 13 | -2.816E-06 | 1.613E-07 | -5.130E-09 | 6.926E-11 | | |
| 14 | -2.873E-06 | 1.340E-07 | -3.504E-09 | 3.913E-11 | | |

(Numerical Example 2)
Various Pieces of Data
Center Focal Length 4.4 mm
Fno 2.8
Half Angle of View ±90°
Surface Data

| Surface Number | r | d | nd | vd |
|---|---|---|---|---|
| 1 | 27.36 | 1.00 | 1.703 | 52.4 |
| 2 | 13.37 | 0.05 | | |
| 3* | 4.92 | 2.40 | 1.536 | 56.0 |
| 4* | 2.42 | 4.20 | | |
| 5* | -3.99 | 2.58 | 1.536 | 56.0 |

| | | | | |
|---|---|---|---|---|
| 6* | -5.38 | 0.20 | | |
| 7 | 5.71 | 1.62 | 1.583 | 59.4 |
| 8 | -29.74 | 0.98 | | |
| 9(STO) | ∞ | 1.15 | | |
| 10 | 17.63 | 2.74 | 1.603 | 65.4 |
| 11 | -3.35 | 0.60 | 1.785 | 25.7 |
| 12 | -19.47 | 1.55 | | |
| 13* | 6.80 | 3.38 | 1.536 | 56.0 |
| 14* | -43.69 | 0.66 | | |
| 15 | ∞ | 0.90 | 1.560 | 56.0 |
| 16 | ∞ | 0.85 | | |

Aspheric Surface Coefficient

| Surface Number | K | A | B | C | D | E |
|---|---|---|---|---|---|---|
| 3 | -4.634E-01 | 4.868E-03 | -7.845E-04 | 1.348E-04 | -1.747E-05 | 1.253E-06 |

(continued)

| Surface Number | K | A | B | C | D | E |
|---|---|---|---|---|---|---|
| 4 | -6.958E-01 | 1.742E-02 | -5.776E-03 | 3.092E-03 | -1.201E-03 | 2.696E-04 |
| 5 | 0.000E+0 0 | 4.533E-03 | -1.467E-03 | 6.577E-04 | -2.115E-04 | 4.871E-05 |
| 6 | 0.000E+0 0 | 1.574E-03 | -1.185E-04 | -1.584E-04 | 1.443E-04 | -5.423E-05 |
| 13 | 0.000E+0 0 | 1.330E-03 | -1.183E-03 | 2.994E-04 | -4.603E-05 | 4.955E-06 |
| 14 | 0.000E+0 0 | 1.670E-02 | -5.403E-03 | 8.838E-04 | -9.971E-05 | 8.862E-06 |
| Surface Number | F | G | H | I | | |
| 3 | -5.205E-08 | 1.265E-09 | -1.681E-11 | 9.454E-14 | | |
| 4 | -3.679E-05 | 3.043E-06 | -1.405E-07 | 2.785E-09 | | |
| 5 | -7.65E-06 | 7.686E-07 | -4.394E-08 | 1.079E-09 | | |
| 6 | 1.1252E-05 | -1.341E-06 | 8.630E-08 | -2.328E-09 | | |
| 13 | -3.906E-07 | 2.128E-08 | -6.966E-10 | 1.010E-11 | | |
| 14 | -6.139E-07 | 2.924E-08 | -8.120E-10 | 9.729E-12 | | |

(Numerical Example 3)
Various Pieces of Data
Center Focal Length 4.4 mm
Fno 2.8
Half Angle of View ±90°

| Surface Number | r | d | nd | vd |
|---|---|---|---|---|
| 1 | 26.80 | 1.12 | 1.703 | 52.4 |
| 2 | 8.47 | 0.98 | | |
| 3* | 3.86 | 3.20 | 1.536 | 56.0 |
| 4* | 1.83 | 3.54 | | |
| 5* | -6.87 | 1.92 | 1.536 | 56.0 |
| 6* | -5.73 | 0.20 | | |
| 7 | 3.63 | 1.74 | 1.539 | 55.6 |
| 8 | 13.12 | 1.69 | | |
| 9(STO) | ∞ | 0.22 | | |
| 10* | 35.10 | 1.20 | 1.583 | 59.4 |
| 11* | -5.79 | 0.40 | | |
| 12 | -7.68 | 0.33 | 1.742 | 25.7 |
| 13 | 6.23 | 1.84 | 1.589 | 61.1 |
| 14 | -9.36 | 0.72 | | |
| 15* | 23.06 | 2.88 | 1.536 | 56.0 |
| 16* | -9.62 | 0.69 | | |
| Spherical | ∞ | 0.90 | 1.569 | 56.4 |
| Spherical | ∞ | 1.43 | | |

Aspheric Surface Coefficient

| Surface Number | K | A | B | C | D | E |
|---|---|---|---|---|---|---|
| 3 | -5.513E-01 | 1.621E-03 | -4.817E-04 | 8.237E-05 | -1.292E-05 | 1.073E-06 |
| 4 | -8.615E-01 | 5.511E-03 | -1.955E-03 | -1.456E-04 | -2.832E-05 | 3.229E-05 |
| 5 | 0.000E+0 0 | -2.677E-03 | 1.363E-04 | -1.769E-04 | 1.235E-04 | -3.507E-05 |
| 6 | 0.000E+0 0 | -6.872E-04 | -3.457E-04 | 2.432E-04 | -6.088E-05 | 8.232E-06 |
| 10 | 0.000E+0 0 | -8.697E-03 | -1.594E-03 | 3.830E-04 | -1.179E-04 | 0.000E+ 00 |
| 11 | 0.000E+0 0 | -4.873E-03 | -4.025E-04 | -7.694E-05 | 2.965E-05 | 0.000E+ 00 |
| 15 | 0.000E+0 0 | 2.170E-03 | -1.611E-03 | 1.453E-04 | 7.909E-05 | -3.374E-05 |
| 16 | 0.000E+0 0 | 1.445E-02 | -5.089E-03 | 8.968E-04 | -1.162E-04 | 1.118E-05 |

| Surface Number | F | G | H | I |
|---|---|---|---|---|
| 3 | -5.062E-08 | 1.380E-09 | -2.026E-11 | 1.228E-13 |
| 4 | -7.139E-06 | 7.722E-07 | -4.358E-08 | 1.034E-09 |
| 5 | 5.4319E-06 | -4.927E-07 | 2.477E-08 | -5.312E-10 |
| 6 | -6.181E-07 | 2.074E-08 | 1.389E-10 | -2.085E-11 |
| 10 | 0.000E+0 0 | 0.000E+ 00 | 0.000E+ 00 | 0.000E+ 00 |
| 11 | 0.000E+0 0 | 0.000E+ 00 | 0.000E+ 00 | 0.000E+ 00 |
| 15 | 6.0816E-06 | -5.992E-07 | 3.159E-08 | -6.970E-10 |
| 16 | -7.948E-07 | 3.965E-08 | -1.235E-09 | 1.792E-11 |

The following table illustrates values related to the inequalities regarding the optical system according to each Example. The following table also illustrates the values related to Inequality (16) described below. As illustrated in the table, the optical system according to each Example satisfies the inequalities.

[Table 4]

| | | Example 1 | Example 2 | Example 3 | Example 4 |
|---|---|---|---|---|---|
| | f23 | -10.62 | -10.62 | -13.08 | -26.66 |
| | fa1 | -3.59 | -3.59 | -3.19 | -3.40 |
| | Ra | 0.55 | 1.26 | 0.55 | 0.55 |
| | Rb | 0.37 | 0.37 | 0.37 | 0.37 |
| | Rc | 0.13 | 0.13 | 0.13 | 0.13 |
| | Rd | 1.58 | 1.58 | 1.58 | 1.58 |
| | f | 4.38 | 4.38 | 4.38 | 4.40 |
| | f2R2 | -4.18 | -4.18 | -4.5 | -3.41 |
| | f3R1 | -13.58 | -13.58 | -11.41 | -19.65 |
| | fg1 | 12.71 | 12.71 | 8.82 | 10.88 |
| | fg2 | 9.52 | 9.52 | 9.79 | 8.15 |
| | R1 | 24.64 | 24.64 | 27.36 | 26.80 |
| | R2 | 12.20 | 12.20 | 13.37 | 8.47 |
| | f3 | -50.57 | -50.57 | -81.81 | 40.68 |

(continued)

| | | Example 1 | Example 2 | Example 3 | Example 4 |
|---|---|---|---|---|---|
| | f1 | -35.47 | -35.47 | -38.30 | -18.08 |
| | d12 | 0.67 | 0.67 | 0.05 | 0.98 |
| (1) | f23/fg1 | -0.84 | -0.84 | -1.48 | -2.45 |
| (2) | Ra/Rb | 1.49 | 3.41 | 1.49 | 1.49 |
| (3) | Rd/Rc | 12.15 | 12.15 | 12.15 | 12.15 |
| (4) | n1 | 1.38 | 1.38 | 1.38 | 1.38 |
| (5) | n2 | 1.65 | 1.65 | 1.65 | 1.65 |
| (6) | n3 | 2.12 | 2.12 | 2.12 | 2.12 |
| (7) | E1 | 0.20 | 0.20 | 0.26 | 0.08 |
| (8) | E2 | 0.88 | 0.88 | 0.84 | 0.88 |
| (9) | f23/fa1 | 2.96 | 2.96 | 4.10 | 7.84 |
| (10) | fa1/f | -0.82 | -0.82 | -0.73 | -0.77 |
| (11) | f3R1/f2R2 | 3.25 | 3.25 | 2.53 | 5.76 |
| (12) | fg1/fg2 | 1.34 | 1.34 | 0.90 | 1.34 |
| (13) | (R2 + R1)/(R2 - R1) | -2.96 | -2.96 | -2.91 | -1.92 |
| (14) | f/f3 | -0.09 | -0.09 | -0.05 | 0.11 |
| (15) | f1/d12 | -52.90 | -52.90 | -766.00 | -18.40 |
| (16) | $f \times \sin(\theta max)/y(\theta max)$ | 1.11 | 1.11 | 1.11 | 1.17 |

[Imaging Apparatus]

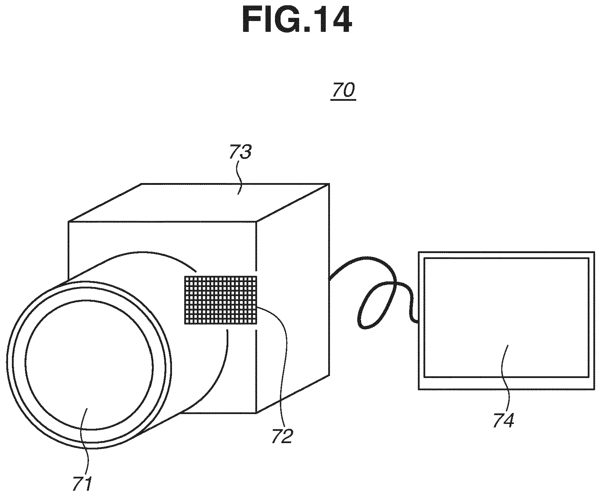

Fig. 14 is a schematic diagram of a main part of an imaging apparatus 70 according to an embodiment of the present invention. The imaging apparatus 70 according to the present embodiment includes an optical system (imaging optical system) 71 according to any of Examples, a light-receiving element 72 that photoelectrically converts an image of an object formed by the optical system 71, and a camera main body (housing) 73 that houses the light-receiving element 72. The optical system 71 is held by a lens barrel (holding member) and connected to the camera main body 73. A display unit 74 that displays the image acquired by the light-receiving element 72 may be connected to the camera main body 73 as illustrated in Fig. 14. As the light-receiving element 72, an imaging element (photoelectric conversion element), such as a charge-coupled device (CCD) sensor or a complementary metal-oxide-semiconductor (CMOS) sensor, can be used.

In a case where the imaging apparatus 70 is used as a distance measuring apparatus, for example, an imaging element (imaging plane phase difference sensor) including a pixel capable of dividing a beam from the object into two beams and photoelectrically converting the two beams can be employed as the light-receiving element 72. In a case where the subject is present on the front focal plane of the optical system 71, positional shifts do not occur in images corresponding to the two divided beams on an image plane of the optical system 71. However, in a case where the subject is present at a position other than the front focal plane of the optical system 71, positional shifts occur in the images. In this situation, the positional shift in each image corresponds to the amount of displacement of the subject from the front focal plane. Thus, the amounts of positional shifts in the images and the directions of the positional shifts are acquired using the imaging plane phase difference sensor, whereby the distance to the subject is able to be measured.

The optical system 71 and the camera main body 73 may be configured to be attachable to and detachable from each other. That is, the optical system 71 and the lens barrel may be configured as an interchangeable lens (lens device). The optical system according to each Example can be applied not only to an imaging apparatus, such as a digital still camera, a silver halide film camera, a video camera, an in-vehicle camera, or a monitoring camera, but also to various optical apparatuses, such as a telescope, binoculars, a projector (projection apparatus), and a digital copying machine.

[In-Vehicle System]

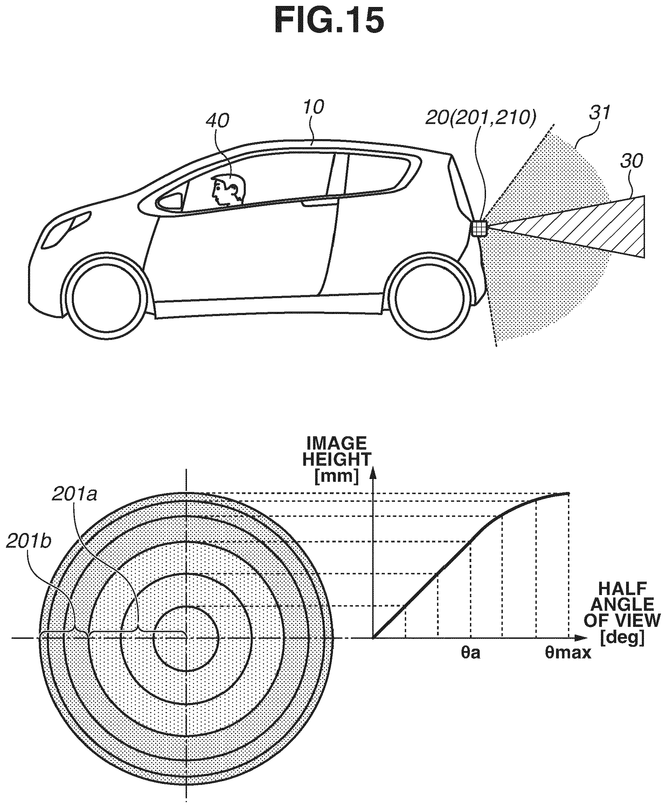

The upper part of Fig. 15 is a schematic diagram of a moving apparatus 10 according to an embodiment of the present invention and an imaging apparatus 20 (in-vehicle camera) held by the moving apparatus 10. The upper part of Fig. 15 illustrates a case where the moving apparatus 10 is an automobile (vehicle). The moving apparatus 10 includes an in-vehicle system (driving assistance apparatus or display system) (not illustrated) for assisting a user 40 (driver or passenger) of the moving apparatus 10 using an image acquired by the imaging apparatus 20. In the present embodiment, a case where the imaging apparatus 20 is installed to capture the rear direction of the moving apparatus 10 is illustrated. Alternatively, the imaging apparatus 20 may be installed to capture the front direction or the side directions of the moving apparatus 10. Two or more imaging apparatuses 20 may be installed at two or more positions in the moving apparatus 10.

The imaging apparatus 20 includes an optical system 201 according to any of Examples and an imaging unit 210. The optical system 201 is an optical system (different-angles-of-view lens) in which the image forming magnification differs between a first angle of view (first field of view) 30 and a second angle of view (second field of view) 31 greater than the first angle of view 30. An imaging surface (light-receiving surface) of the imaging unit 210 includes a first region where an object included in the first angle of view 30 is captured and a second region where an object included in the second angle of view 31 is captured. In this case, the number of pixels per unit angle of view in the first region is greater than the number of pixels per unit angle of view in the second region except for the first region. In other words, the resolution at the first angle of view (in the first region) of the imaging apparatus 20 is higher than the resolution at the second angle of view (in the second region) of the imaging apparatus 20.

The optical characteristic of the optical system 201 is described in detail below. The left diagram in the lower part of Fig. 15 illustrates an image height y [mm] at each half angle of view θ [deg.] on the imaging surface of the imaging unit 210 as a contour line. The right diagram in the lower part of Fig. 15 illustrates the relationship between each half angle of view θ and the image height y in the first quadrant of the left diagram (projection characteristic of the optical system 201) in graph.

As illustrated in the lower part of Fig. 15, the optical system 201 is configured so that a projection characteristic y(θ) is different between an angle of view less than a predetermined half angle of view θa and an angle of view greater than or equal to the half angle of view θa. Thus, the amount of increase in (resolution at) the image height y with respect to the half angle of view θ per unit also differs with respect to each angle of view. The local resolution of the optical system 201 is represented by a derivative value dy(θ)/dθ of the projection characteristic y(θ) with respect to the half angle of view θ. The left diagram in the lower part of Fig. 15 indicates that the resolution increases with an increase in the interval between contour lines of the image height y with respect to each half angle of view θ. The right diagram in the lower part of Fig. 15 indicates that the resolution increases with an increase in the slope of the graph of the projection characteristic y(θ).

In the left diagram in the lower part of Fig. 15, a first region 201a as a center region corresponds to an angle of view less than the half angle of view θa, and a second region 201b as a peripheral region corresponds to an angle of view greater than or equal to the half angle of view θa. The angle of view less than the half angle of view θa corresponds to the first angle of view 30 in the upper part of Fig. 15, and an angle of view obtained by combining the angle of view less than the half angle of view θa and the angle of view greater than or equal to the half angle of view θa corresponds to the second angle of view 31 in the upper part of Fig. 15. As described above, the first region 201a is a region having high resolution and low distortion, and the second region 201b is a region having low resolution and high distortion.

It is desirable that a value θa/θmax of the ratio of the half angle of view θa to a maximum half angle of view θmax should be 0.15 or more and 0.35 or less. It is more desirable that the value θa/θmax should be 0.16 or more and 0.25 or less. For example, since the maximum half angle of view θmax = 90° in each Example, it is desirable that the value of the half angle of view θa should be 13.5° or more and 31.5° or less. It is more desirable that the value of the half angle of view θa should be 14.4° or more and 22.5° or less.

The optical system 201 is configured in such a manner that the projection characteristic y(θ) in the first region 201a is different from f × θ (equidistant projection method) and also different from the projection characteristic in the second region 201b. In this case, it is desirable that the projection characteristic y(θ) of the optical system 201 should satisfy the following inequality (16).

$$1.0 < f \times \sin(\theta max)/y(\theta max) \leq 1.9 \quad (16)$$

In Inequality (16), y(θmax) is equivalent to an image height corresponding to the maximum half angle of view θmax (maximum image height). Satisfying Inequality (16) decreases the resolution in the second region 201b, which leads to achievement of widening of the angle of view of the optical system 201. Further, the resolution in the first region 201a is able to be set higher than the resolution in a center region of a general fisheye lens employing an orthogonal projection method, y(θ) = f × sinθ. If f × sin(θmax)/y(θmax) falls below the lower limit of Inequality (16), the resolution in the first region 201a decreases or the maximum image height increases more than these of the fisheye lens using the orthogonal projection method, which is undesirable because it results in upsizing of the optical system. If f × sin(θmax)/y(θmax) exceeds the upper limit of Inequality (16), the resolution in the first region 201a excessively increases, which is undesirable because it results in a difficulty in achievement of a wide angle of view equivalent to that of the fisheye lens using the orthogonal projection method, or results in a difficulty in maintaining excellent optical performance.

Further, it is desirable that the projection characteristic y(θ) of the optical system 201 should satisfy the following inequality (16a). It is more desirable that the projection characteristic y(θ) of the optical system 201 should satisfy the following inequality (16b).

$$1.0 < f \times \sin(\theta max)/y(\theta max) \leq 1.7 \ (16a)$$

$$1.0 < f \times \sin(\theta max)/y(\theta max) \leq 1.4 \ (16b)$$

As described above, in the first region 201a, the distortion of the optical system 201 is small, and the resolution is high. Thus, an image with higher definition than an image in the second region 201b is obtained. Thus, to obtain excellent visibility, the first region 201a (the first angle of view 30) is set as a region of interest of the user 40. For example, in a case where the imaging apparatus 20 is installed in the rear portion of the moving apparatus 10 as illustrated in the upper part of Fig. 15, an image corresponding to the first angle of view 30 is displayed on an electronic rearview mirror, whereby the user 40 can obtain a natural sense of perspective when looking a rear vehicle. On the other hand, the second region 201b (the second angle of view 31) corresponds to a wide angle of view including the first angle of view 30. Thus, for example, an image corresponding to the second angle of view 31 is displayed on an in-vehicle display when the moving apparatus 10 goes backwards, whereby it is possible to assist the driving of the user 40.

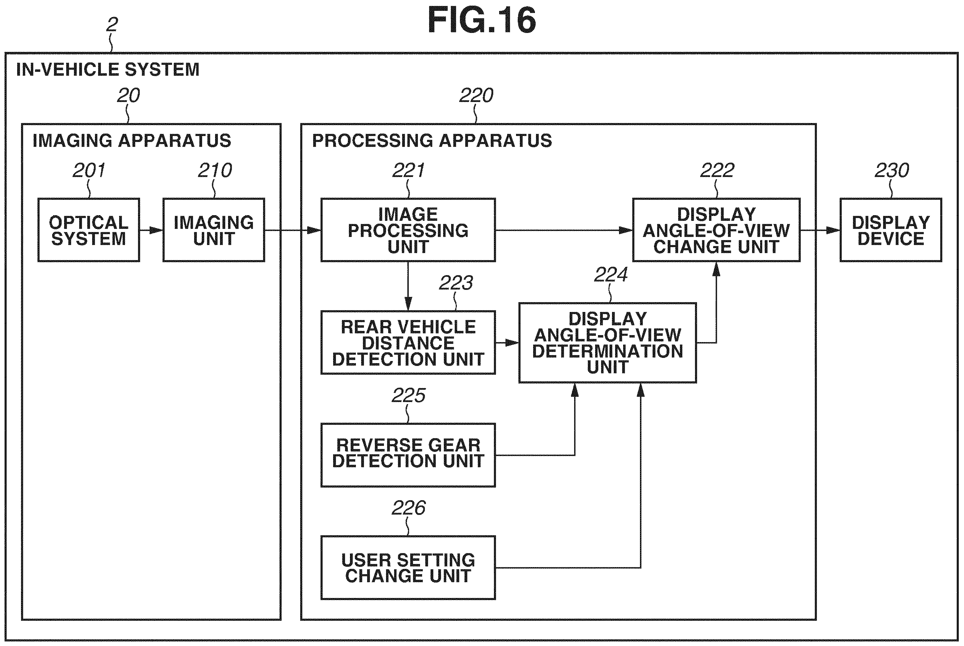

Fig. 16 is a functional block diagram illustrating an example of the configuration of an in-vehicle system 2 according to the present embodiment. The in-vehicle system 2 is a system for displaying an image obtained by the imaging apparatus 20 installed in the rear portion of the moving apparatus 10 to the user 40. The in-vehicle system 2 includes the imaging apparatus 20, a processing apparatus 220, and a display device (a display unit) 230. As described above, the imaging apparatus 20 includes the optical system 201 and the imaging unit 210. The imaging unit 210 includes an imaging element, such as a CCD sensor or a CMOS sensor. The imaging unit 210 photoelectrically converts an optical image formed by the optical system 201, thereby generating captured image data. Then, the imaging unit 210 outputs the captured image data to the processing apparatus 220.

The processing apparatus 220 includes an image processing unit 221, a display angle-of-view determination unit 224 (determination unit), a user setting change unit 226 (first change unit), a rear vehicle distance detection unit 223 (first detection unit), a reverse gear detection unit 225 (second detection unit), and a display angle-of-view change unit 222 (second change unit). The processing apparatus 220 is a computer, such as a central processing unit (CPU) or a microcomputer and functions as a control unit that controls operations of the components based on a computer program. At least one of the components of the processing apparatus 220 may be achieved by hardware, such as an application-specific integrated circuit (ASIC) or a programmable logic array (PLA).

The image processing unit 221 performs image processing, such as wide dynamic range (WDR) correction, gamma correction, lookup table (LUT) processing, and distortion correction on the captured image data acquired from the imaging unit 210, thereby generating image data. The distortion correction is performed on at least captured image data corresponding to the second region 201b. With this configuration, when an image is displayed on the display device 230, the user 40 can visually check the image with ease, and the detection rate of a rear vehicle by the rear vehicle distance detection unit 223 improves. The distortion correction may not be performed on captured image data corresponding to the first region 201a. The image processing unit 221 outputs the image data generated by executing image processing as described above to the display angle-of-view change unit 222 and the rear vehicle distance detection unit 223.

Using the image data output from the image processing unit 221, the rear vehicle distance detection unit 223 acquires information about the distance to a rear vehicle included in image data corresponding to a range that does not include the first angle of view 30 in the second angle of view 31. For example, the rear vehicle distance detection unit 223 can detect a rear vehicle based on image data corresponding to the second region 201b in the image data and calculate the distance from the rear vehicle to the self vehicle based on the position of the detected rear vehicle and a change in the size of the detected rear vehicle. The rear vehicle distance detection unit 223 outputs information about the calculated distance to the display angle-of-view determination unit 224.

Further, the rear vehicle distance detection unit 223 may determine the vehicle model of the rear vehicle based on data on feature information, such as the shape and the color of each vehicle model output as a result of machine learning (deep learning) based on images of many vehicles. In this case, the rear vehicle distance detection unit 223 may output information about the vehicle model of the rear vehicle to the display angle-of-view determination unit 224. The reverse gear detection unit 225 detects whether the transmission of the moving apparatus 10 (the self vehicle) is in reverse gear. Then, the reverse gear detection unit 225 outputs the result of the detection to the display angle-of-view determination unit 224.

Based on the output from at least one of the rear vehicle distance detection unit 223 and the reverse gear detection unit 225, the display angle-of-view determination unit 224 determines which of the first angle of view 30 and the second angle of view 31 is to be used as the angle of view (the display angle of view) of an image to be displayed on the display device 230. Then, the display angle-of-view determination unit 224 performs an output to the display angle-of-view change unit 222 according to the result of the determination. For example, in a case where a value of the distance in the distance information is less than or equal to a certain threshold, e.g., 3 m, the display angle-of-view determination unit 224 can determine to use the second angle of view 31 as the display angle of view. In a case where a value of the distance in the distance information is greater than the threshold, the display angle-of-view determination unit 224 can determine to use the first angle of view 30 as the display angle of view. Or in a case where the reverse gear detection unit 225 notifies the display angle-of-view determination unit 224 that the transmission of the moving apparatus 10 is in reverse gear, the display angle-of-view determination unit 224 can determine to use the second angle of view 31 as the display angle of view. In a case where the transmission of the moving apparatus 10 is not in reverse gear, the display angle-of-view determination unit 224 can determine to use the first angle of view 30 as the display angle of view.

Further, in the state where the transmission of the moving apparatus 10 is in reverse gear, the display angle-of-view determination unit 224 can determine to use the second angle of view 31 as the display angle of view, regardless of the result of the rear vehicle distance detection unit 223. In a case where the transmission of the moving apparatus 10 is not in reverse gear, the display angle-of-view determination unit 224 can determine that the display angle of view is to be determined in accordance with the detection result of the rear vehicle distance detection unit 223. In response to receipt of the vehicle model information from the rear vehicle distance detection unit 223, the display angle-of-view determination unit 224 may change a determination criterion of whether to change the angle of view, according to the vehicle model of the moving apparatus 10. For example, in a case where the moving apparatus 10 is a large-sized vehicle, such as a truck, the braking distance is longer than that of a standard-sized vehicle. Thus, it is desirable that the above threshold should be longer, e.g., 10 m, than that for the standard-sized vehicle.

The user setting change unit 226 allows the user 40 to change the determination criterion of whether to change the display angle of view to the second angle of view 31 in the display angle-of-view determination unit 224. The determination criterion set (changed) by the user 40 is input to the display angle-of-view determination unit 224 via the user setting change unit 226.

According to the result of the determination of the display angle-of-view determination unit 224, the display angle-of-view change unit 222 generates a display image to be displayed on the display device 230. For example, in a case where the display angle-of-view determination unit 224 determines to use the first angle of view 30 as the display angle of view, the display angle-of-view change unit 222 clips a rectangular narrow-angle image (a first image) from image data corresponding to the first angle of view 30 and outputs the first image to the display device 230. In a case where a rear vehicle satisfying a predetermined condition is present in image data corresponding to the second angle of view 31, the display angle-of-view change unit 222 outputs an image (second image) including the rear vehicle to the display device 230. The second image may include an image corresponding to the first region 201a. The display angle-of-view change unit 222 functions as a display control unit that performs display control to switch between a first display state where the display device 230 displays the first image and a second display state where the display device 230 displays the second image.

The clipping of an image by the display angle-of-view change unit 222 is executed by reading an image to be clipped from image data that has been output from the image processing unit 221 and stored in a storage unit (a memory), such as a random-access memory (RAM). A region corresponding to the first image in the image data is a rectangular region in the first angle of view 30 corresponding to the first region 201a. A region corresponding to the second image in the image data is a rectangular region including the rear vehicle in the second angle of view 31 corresponding to the second region 201b.

The display device 230 includes a liquid crystal display or an organic electroluminescent (EL) display unit and displays the display image output from the display angle-of-view change unit 222. For example, the display device 230 includes a first display unit as an electronic rearview mirror installed at a position above the windshield (front glass) of the moving apparatus 10 and a second display unit as an operation panel (monitor) installed at a position below the windshield of the moving apparatus 10. Based on this configuration, the first and second images generated from the image data can be displayed on the first and second display units, respectively. The first display unit may include, for example, a half mirror with which the first display unit is able to be used as a mirror when the first display unit is not used as a display. The second display unit may also serve as, for example, a display of a navigation system or an audio system.

The moving apparatus 10 may be not only a vehicle, such as an automobile, but also a moving member, such as a vessel, an aircraft, an industrial robot, or a drone. While the in-vehicle system 2 according to the present embodiment is used to display an image to the user 40, the present invention is not limited to this. The in-vehicle system 2 may also be used for driving assistance, such as cruise control (including adaptive cruise control) or automatic driving. Further, the in-vehicle system 2 can be applied not only to a moving apparatus but also to various devices using object recognition, such as an intelligent transportation system (ITS).

[Variations]

Although the preferred embodiments and examples of the present invention have been described above, the present invention is not limited to these embodiments and examples, and various combinations, modifications, and changes can be made within the scope of the gist of the present invention.

For example, the optical system according to each of the embodiments is to be used in the visible region and is configured to perform favorable aberration correction in the entire visible region, but the wavelength range in which aberration correction is performed may be changed as necessary. For example, each optical system may be configured to perform aberration correction only in a specific wavelength range in the visible region, or may be configured to perform aberration correction in a wavelength range in the infrared region other than the visible region.

In the in-vehicle system 2, a distance measuring apparatus as described above may be employed as the imaging apparatus 20. In this case, the in-vehicle system 2 may include a determination unit that determines, based on information about the distance to a target object acquired by the imaging apparatus 20, the possibility of a collision with the target object. As the imaging apparatus 20, a stereo camera including two imaging units 210 may be employed. In this case, even without an imaging plane phase difference sensor, the synchronized imaging units 210 simultaneously acquire two pieces of image data, and perform processing similar to the above using the two pieces of image data. In a case where the difference in imaging time between the imaging units 210 is known, the imaging units 210 may not be synchronized with each other.

While the present invention has been described with reference to embodiments, it is to be understood that the invention is not limited to the disclosed embodiments. The scope of the following claims encompasses all such modifications and equivalent structures and functions.

**Claims**

**1.**   An optical system (100, 110, 201) comprising, in order from an object side to an image side:

>   a front group (G1);
>   an aperture stop (STO); and
>   a rear group (G2),
>   wherein the front group includes a first lens (L1), a second lens (L2), and a third lens (L3) disposed in order from the object side to the image side,
>   wherein an object side surface of the second lens is an aspheric surface having an inflection point in a cross section including an optical axis,
>   wherein an image side surface of the second lens is a concave surface,
>   wherein a first antireflection film is disposed on at least one of the image side surface of the second lens and an object side surface of the third lens, and
>   wherein the following inequality is satisfied for light incident perpendicularly on the surface on which the first antireflection film is disposed and parallel to an optical axis of the optical system:

$$1.00 < Ra/Rb,$$

>   wherein Ra is the average reflectance of light having a wavelength of at least 400 nm and up to 450 nm, and Rb is the average reflectance of light having a wavelength of at least 700 nm and up to 750 nm.

**2.**   The optical system according to claim 1,

>   herein the first antireflection film includes first to third layers including materials different from each other, and
>   wherein the following inequalities is satisfied:

$$1.30 \le n1 \le 1.40 \ ,$$

$$1.45 \le n2 \le 1.70 \ ,$$

$$1.80 \le n3 \le 2.20 \ ,$$

and

where a refractive index of the first layer is n1, a refractive index of the second layer is n2, and a refractive index of the third layer is n3.

3. The optical system according to claim 2, wherein the second layer and the third layer are alternately disposed a plurality of times in the first antireflection film, and the first layer is disposed at a position furthest away from the surface on which the first antireflection film is disposed.

4. The optical system according to any one of claims 1 to 3, wherein the first antireflection film includes a first layer including magnesium fluoride, a second layer including silicon oxide or aluminum oxide, and a third layer including tantalum oxide.

5. The optical system according to any one of claims 1 to 4, wherein the first antireflection film is disposed on both the image side surface of the second lens and the object side surface of the third lens.

6. The optical system according to any one of claims 1 to 5, wherein the object side surface of the third lens is a concave surface.

7. The optical system according to any one of claims 1 to 6,

wherein the optical system includes a surface on which a second antireflection film is disposed, and
wherein the following inequality is satisfied for light incident perpendicularly on the surface on which the first antireflection film is disposed and parallel to an optical system:

$$1.0 < Rd/Rc,$$

wherein Rc is the average reflectance of light having a wavelength of at least 400 nm and up to 450 nm, and Rd is the average reflectance of light having a wavelength of at least 700 nm and up to 750 nm.

8. The optical system according to any one of claims 1 to 7, wherein a graph indicating a curvature at a position in a radial direction of the aspheric surface in the cross section including the optical axis has a first extremum and a second extremum.

9. The optical system according to claim 8, wherein at least one of the following inequalities is satisfied:

$$0.02 \le E1 \le 0.40,$$

and

$$0.60 \le E2 \le 0.98,$$

where normalized distances from the optical axis to positions corresponding to the first and second extrema are E1 and E2, respectively, on the aspheric surface.

10. The optical system according to any one of claims 1 to 9, wherein the following inequality is satisfied:

$$2.4 \le f23/fa1 \le 16.0,$$

where a combined focal length of the second and third lenses is f23, and a focal length of an air lens between the second and third lenses is fa1.

11. The optical system according to any one of claims 1 to 10, wherein the following inequality is satisfied:

$$-1.20 \le fa1/f \le -0.50,$$

where a focal length of the optical system is f, and a focal length of an air lens between the second and third lenses is fa1.

12. The optical system according to any one of claims 1 to 11, wherein the following inequality is satisfied:

$$2.0 \le f3R1/f2R2 \le 7.0,$$

where a focal length of the image side surface of the second lens is f2R2, and a focal length of the object side surface of the third lens is f3R1.

13. The optical system according to any one of claims 1 to 12, wherein the following inequality is satisfied:

$$0.6 \le fg1/fg2 \le 1.5 ,$$

where a focal length of the front group is fg1, and a focal length of the rear group is fg2.

14. The optical system according to any one of claims 1 to 13, wherein the following inequality is satisfied:

$$-3.50 \le (R2 + R1)/(R2 - R1) \le -1.85,$$

where a radius of curvature of an object side surface of the first lens is R1, and a radius of curvature of an image side surface of the first lens is R2.

15. The optical system according to any one of claims 1 to 14, wherein an amount of increase in an image height per unit angle of view in a first region including the optical axis is greater than an amount of increase in an image height per unit angle of view in a second region which is on a side with a periphery with respect to the first region.

16. The optical system according to any one of claims 1 to 15, wherein the following inequality is satisfied:

$$1.0 < f \times \sin(\theta max)/y(\theta max) \le 1.9,$$

where a projection characteristic of the optical system indicating a relationship between a half angle of view $\theta$ and an image height y is $y(\theta)$, a maximum half angle of view of the optical system is $\theta max$, and a focal length of the optical system is f.

17. The optical system according to any one of claims 1 to 16, wherein the following inequality is satisfied:

$$-2.54 \le f23/fg1 \le -0.15,$$

where a combined focal length of the second and third lenses is f23, and a focal length of the front group is fg1.

18. An imaging apparatus comprising:

the optical system according to any one of claims 1 to 17; and
an imaging element for capturing an image of an object through the optical system.

19. A display system comprising:

the imaging apparatus according to claim 18; and
a display device for displaying an image obtained based on an output of the imaging apparatus.

20. A moving apparatus comprising:

the imaging apparatus according to claim 18,
wherein the moving apparatus is movable while holding the imaging apparatus.

# FIG.1

<u>100</u>

# FIG.2

EP 4 455 742 A1

# FIG.3

<u>200</u>

# FIG.4

HALF ANGLE
OF VIEW [deg]

HALF ANGLE
OF VIEW [deg]

1.00

0.75

0.50

0.25

90.00

67.50

45.00

22.50

90.00

67.50

45.00

22.50

X

Y

-0.200 -0.100  0.0  0.100  0.200

SPHERICAL
ABERRATION [mm]

-0.200 -0.100  0.0  0.100  0.200

FIELD CURVATURE [mm]

-100.0 -50.0  0.0  50.0  100.0

DISTORTION [%]

| | |
|---|---|
| ------------ | 656.3 nm |
| ⎯⎯⎯⎯ | 587.6 nm |
| ⎯ ⸱⸱ ⎯ ⸱⸱ ⎯ | 486.1 nm |
| ⎯ ⎯ ⎯ ⎯ | 435.8 nm |

EP 4 455 742 A1

# FIG.5

_300_

EP 4 455 742 A1

# FIG.6

SPHERICAL ABERRATION [mm]

HALF ANGLE OF VIEW [deg]

FIELD CURVATURE [mm]

HALF ANGLE OF VIEW [deg]

DISTORTION [%]

| | |
|---|---|
| ---------- | 656.3 nm |
| —————— | 587.6 nm |
| —··—··— | 486.1 nm |
| — — — — — | 435.8 nm |

EP 4 455 742 A1

**FIG.7**

_110_

# FIG.8

# FIG.9

# FIG.10

FIG.11

# FIG.12

- - - COMPARATIVE EXAMPLE
——— EXAMPLE 2

REFLECTANCE [%] vs WAVELENGTH [nm]

# FIG.13

# FIG.14

<u>70</u>

# FIG.15

IMAGE
HEIGHT
[mm]

201a
201b

HALF
ANGLE
OF VIEW
[deg]

θa    θmax

# FIG.16

**IN-VEHICLE SYSTEM** *2*

**IMAGING APPARATUS** *20*

**OPTICAL SYSTEM** *201* → **IMAGING UNIT** *210*

**PROCESSING APPARATUS** *220*

**IMAGE PROCESSING UNIT** *221*

**REAR VEHICLE DISTANCE DETECTION UNIT** *223*

**DISPLAY ANGLE-OF-VIEW DETERMINATION UNIT** *224*

**REVERSE GEAR DETECTION UNIT** *225*

**USER SETTING CHANGE UNIT** *226*

**DISPLAY ANGLE-OF-VIEW CHANGE UNIT** *222*

**DISPLAY DEVICE** *230*

EP 4 455 742 A1

Europäisches
Patentamt

European
Patent Office

Office européen
des brevets

## EUROPEAN SEARCH REPORT

**Application Number**

EP 24 17 2250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/260956 A1 (YAMAKAWA HIROMITSU [JP]) 17 September 2015 (2015-09-17) | 1-5,7,8, 14-16, 18-20 | INV.<br>G02B1/115<br>G02B13/00 |
| A | * par. 3; par. 88; par. 94 and fig. 1; fig. 1; par. 107; par. 117; fig. 6; par. 121 * | 6,9-13, 17 | G02B13/04<br>G02B13/18<br>G02B9/64 |
| Y | US 2013/201562 A1 (KAWAGISHI SHUICHIRO [JP] ET AL) 8 August 2013 (2013-08-08)<br><br>* par. 14; fig. 1 and par. 72; fig. 1 * | 1,5,7,8, 14-16, 18-20 | |
| Y | US 2017/212278 A1 (ABE SUSUMU [JP]) 27 July 2017 (2017-07-27)<br><br>* par. 55; fig. 4; par. 109; par. 98 - 101 * | 2-5,7, 14-16, 18-20 | |

-----

-----

-----

**TECHNICAL FIELDS SEARCHED (IPC)**

G02B

The present search report has been drawn up for all claims

| Place of search | Date of completion of the search | Examiner |
|---|---|---|
| Munich | 19 August 2024 | Thieme, Markus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 17 2250

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2024

| Patent document cited in search report | | Publication date | Patent family member(s) | | Publication date |
|---|---|---|---|---|---|
| US 2015260956 | A1 | 17-09-2015 | CN 104914553 A | | 16-09-2015 |
| | | | DE 102015103153 A1 | | 01-10-2015 |
| | | | JP 6066424 B2 | | 25-01-2017 |
| | | | JP 2015172655 A | | 01-10-2015 |
| | | | US 2015260956 A1 | | 17-09-2015 |
| US 2013201562 | A1 | 08-08-2013 | JP 5662982 B2 | | 04-02-2015 |
| | | | JP 2013109338 A | | 06-06-2013 |
| | | | TW 201326880 A | | 01-07-2013 |
| | | | US 2013201562 A1 | | 08-08-2013 |
| US 2017212278 | A1 | 27-07-2017 | CN 106997064 A | | 01-08-2017 |
| | | | EP 3196677 A1 | | 26-07-2017 |
| | | | JP 6862192 B2 | | 21-04-2021 |
| | | | JP 2017134404 A | | 03-08-2017 |
| | | | US 2017212278 A1 | | 27-07-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020046565 A